# EUROPÄISCHE PATENTANMELDUNG

(11) **EP 4 086 828 A1**
(43) Veröffentlichungstag der Anmeldung: **09.11.2022**
(21) Anmeldenummer: 22172000.6
(22) Anmeldetag: 06.05.2022
(51) Int. Cl.: G06Q 10/06, G06Q 50/06

(54) **SYSTEM UND VERFAHREN ZUR RECHTSSICHEREN, INTELLIGENTEN STEUERUNG VON PROZESSEN**

(30) Priorität: 07.05.2021 DE 102021111936
(71) Anmelder: Francotyp-Postalia GmbH, 13089 Berlin (DE)
(72) Erfinder: HÜBLER, Uwe, 15366 Neuenhagen (DE); HEINRICH, Clemens, 16515 Oranienburg (DE); GÜNTHER, Stephan, 16548 Glienicke (DE)
(74) Vertreter: Hertin und Partner Rechts- und Patentanwälte PartG mbB

(57) **Zusammenfassung**

Die Erfindung betrifft ein System und ein Verfahren zur rechtssicheren, intelligenten Steuerung von Prozessen in einer Anlage zur Erzeugung und/oder Bereitstellung von Energie. Das System umfasst dabei mindestens eine Erfassungseinrichtung, eine Auditoreinrichtung, eine Aktionseinrichtung und eine Signiereinrichtung. Das System bzw. das Verfahren ermöglicht dabei, eine Ableitung von Fehlerquellen auf Basis von vorhandenen Prozessinformationen und damit eine Schaffung von Möglichkeiten zu deren automatisierter Behebung. Neben normalen Statusberichten können besonders vorteilhaft relevante Prozessvorkommnisse, d.h. z.B. Abweichungen von definierten Vorgaben wie maximale Verbrauchswerte in definierten Zeitintervallen oder auch Unterschreitungen von vorgegebenen Temperatur- und Druckwerten automatisiert ausgewertet, Handlungsoptionen durch ein Expertensystem automatisiert erstellt und deren Auswahl über ein erfindungsgemäßes digitales Unterschriftsverfahren und -system mit manipulationssicherem Zeitstempel an definierte Personen/Stellen gemeldet und/oder veranlasst werden. Darüber hinaus erfolgt eine Quittierung mit rechtskonformer digitaler Unterschrift (Signatur), die eine rückwirkende Steuerung auf die Prozessanlage bzw. Anlagenteile insbesondere über die Aktionseinrichtung ermöglicht.

## Beschreibung

Die Erfindung betrifft ein System und ein Verfahren zur rechtssicheren, intelligenten Steuerung von Prozessen in einer Anlage zur Erzeugung und/oder Bereitstellung von Energie. Das System umfasst dabei mindestens eine Erfassungseinrichtung, eine Auditoreinrichtung, eine Aktionseinrichtung und eine Signiereinrichtung. Die Erfassungseinrichtung ist dazu eingerichtet, anlagenbezogene Prozessgrößen automatisiert aufzunehmen. Die Auditoreinrichtung ist hingegen dazu konfiguriert die aufgenommenen Prozessgrößen zu analysieren und ein Auslösungsereignis zu erkennen. Weiterhin ist die Auditoreinrichtung in der Lage, einen ersten Datensatz zu generieren, welcher die aufgenommenen Prozessgrößen und/oder einen Informationswert über das Auslösungsereignis umfasst. Die Auditoreinrichtung kann diesen Datensatz als Datenobjekt an die Aktionseinrichtung übertragen. Die Aktionseinrichtung wiederum ist dazu eingerichtet, eine für das Datenobjekt zuständige Signiereinrichtung zu ermitteln. Weiterhin kann die Aktionseinrichtung einen Anforderungsdatensatz erstellen, welcher eine Signaturanforderung und mindestens einen Teil des Datenobjektes umfasst. Dieser Anforderungsdatensatz kann an die zuständige Signiereinrichtung übertragen werden. Ferner kann ein Aktionsdatensatz durch die Aktionseinrichtung erzeugt und der Auditoreinrichtung bereitgestellt werden. Die Signiereinrichtung ist dazu eingerichtet, einen Antwortdatensatz zu erzeugen, welcher eine elektronische Signatur über mindestens einen Teil des Anforderungsdatensatzes umfasst. Darüber hinaus kann der Antwortdatensatz an die Aktionseinrichtung und/oder an eine weitere Signiereinrichtung übermittelt werden.

### Hintergrund und Stand der Technik

Im Stand der Technik sind Prozess- und Anlagensteuerung über das Internet hinlänglich bekannt. Sogenannte IoT-Systeme (Internet of Things) ermöglichen es, einem Nutzer/Anwender ferngesteuert bzw. remote Prozesse und Anlagen anhand deren Betriebs- und Zustandsparametern zu überwachen und auch zu steuern.

Es ist derzeit jedoch sehr aufwändig und kostenintensiv, bei auftretenden Fehlfunktionen oder Ausnahmezuständen sowie unerwartet eintretenden Ereignissen, die ein loT-System betreffen können, eine der jeweiligen Situation optimal angepasste automatisierte Reaktion zur Fehlerbehebung sowie deren rechtssichere Dokumentation zu erzeugen. Es liegt daher ein großer Bedarf an einer Lösung zur Behebung dieses Mangels vor.

Insbesondere in Anlagen zur Erzeugung und/oder Bereitstellung von Energie existieren eine Vielzahl unterschiedlicher sicherheitsrelevanter Prozesse, die zu überwachen, zu steuern und zu dokumentieren sind. Es sind beispielsweise alle Prozesse um eine Zu- und Abschaltung von Sensorik und Aktuatorik (wie z.B. Strom-, Wasser- und Energiemengenzähler, Temperatur- und Druckmessumformer sowie Ventile, Pumpen und elektrische Schaltanlagen) von dezentralen Versorgungsstationen betroffen.

Die automatisierte Erfassung von Prozessgrößen wie z.B. Strom-, Wasser- oder Wärmeverbrauch über entsprechende Sensoren, aber auch Zugangsüberwachung zu sicherheitsrelevanten Anlagenteilen/Schaltstationen mit Hilfe von Chipkartenlesung sind im Stand der Technik bekannt.

Allerdings fehlt es an einem System und/oder Verfahren, welches die aufgenommenen Parameter in einer Anlage zur Erzeugung und/oder Bereitstellung von Energie zentral verarbeitet, automatisiert analysiert sowie insbesondere eine rechtssichere Informationsweitergabe an verantwortliche Personen/Stellen bei auftretenden Über-/Unterschreitungen kritischer Prozessparameter gewährleistet, sodass eine entsprechende automatisierte Reaktion durch diese Stellen/Personen ermöglicht wird und im Nachhinein eindeutig dokumentiert wird, wie der Informationsfluss zeitlich und inhaltlich abgelaufen ist.

### Aufgabe der Erfindung

Die Aufgabe der Erfindung war es daher die Nachteile aus dem Stand der Technik zu beseitigen und ein kostengünstiges sowie automatisiertes System und Verfahren zur rechtssicheren, intelligenten Steuerung und Dokumentation von Prozessen in einer Anlage zur Erzeugung und/oder Bereitstellung von Energie bereitzustellen.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung ein System zur rechtssicheren, intelligenten Steuerung von Prozessen in einer Anlage zur Erzeugung und/oder Bereitstellung von Energie, wobei das System mindestens eine Erfassungseinrichtung, eine Auditoreinrichtung, eine Aktionseinrichtung und eine Signiereinrichtung umfasst, dadurch gekennzeichnet, dass
a) die Erfassungseinrichtung dazu eingerichtet ist, anlagenbezogene Prozessgrößen automatisiert aufzunehmen;
b) die Auditoreinrichtung dazu eingerichtet ist,
   (i) die aufgenommenen Prozessgrößen zu analysieren und ein Auslösungsereignis zu erkennen;
   (ii) einen ersten Datensatz zu generieren, wobei der erste Datensatz mindestens eine der aufgenommenen Prozessgrößen und/oder einen Informationswert über das Auslösungsereignis umfasst;
   (iii) den ersten Datensatz als Datenobjekt an die Aktionseinrichtung zu übermitteln;
c) die Aktionseinrichtung dazu eingerichtet ist,
   (i) eine für das Datenobjekt zuständige Signiereinrichtung zu ermitteln;
   (ii) einen Anforderungsdatensatz an die dem Datenobjekt zugeordnete Signiereinrichtung zu übermitteln, wobei der Anforderungsdatensatz eine Signaturanforderung und mindestens einen Teil des Datenobjektes umfasst;
   (iii) einen Aktionsdatensatz zu erzeugen und der Auditoreinrichtung bereitzustellen;
d) die Signiereinrichtung dazu eingerichtet ist,
   (i) einen Antwortdatensatz zu erzeugen, der eine elektronische Signatur über mindestens einen Teil des Anforderungsdatensatzes umfasst;
   (ii) den Antwortdatensatz an die Aktionseinrichtung und/oder an eine weitere Signiereinrichtung zu übermitteln.

Ein derartiges System zur Lösung der oben genannten Aufgabe ist aus dem Stand der Technik weder bekannt noch einem durchschnittlichen Fachmann nahegelegt. Das erfindungsgemäße System ist vielmehr als eine Abkehr vom Stand der Technik anzusehen, in welchem insbesondere aufgenommene Prozessgrößen und eine Steuerung von Prozessen ausschließlich einer Einzelbetrachtung unterzogen werden und häufig manuelle Überwachungs-, Analyse-, Übertragungs- und/oder Bearbeitungsschritte miteinbezogen werden müssen. Wohingegen das erfindungsgemäße System die Möglichkeit bietet, ein voll automatisch ausgeführtes System zur rechtssicheren, intelligenten Steuerung von Prozessen - ausgehend von der Aufnahme von Prozessgrößen bis hin zur Einstellung von anlagenbezogenen Parametern - bereitzustellen. Das System ermöglicht vor allem auch eine automatisierte rechtssichere Dokumentation.

Vorteilhaft wird durch das erfindungsgemäße System eine Ableitung von Fehlerquellen auf Basis von vorhandenen Prozessinformationen und damit eine Schaffung von Möglichkeiten zu deren automatisierter Behebung ermöglicht. Neben normalen Statusberichten können besonders vorteilhaft relevante Prozessvorkommnisse, d.h. z.B. Abweichungen von definierten Vorgaben wie maximale Verbrauchswerte in definierten Zeitintervallen oder auch Unterschreitungen von vorgegebenen Temperatur- und Druckwerten automatisiert ausgewertet, Handlungsoptionen durch ein Expertensystem automatisiert erstellt und deren Auswahl über ein erfindungsgemäßes digitales Unterschriftsverfahren und -system mit manipulationssicherem Zeitstempel an definierte Personen/Stellen gemeldet und/oder veranlasst werden. Darüber hinaus erfolgt eine Quittierung mit rechtskonformer digitaler Unterschrift (Signatur), die eine rückwirkende Steuerung auf die Prozessanlage bzw. Anlagenteile insbesondere über die Aktionseinrichtung ermöglicht. Damit ist weiterhin jederzeit nachvollziehbar, welche Art von Abweichungen oder Ausfällen zu welcher Zeit aufgetreten sind und welche Personen darüber informiert wurden und zudem welche der automatisiert vorgeschlagenen Fehlerbehebungsmaßnahmen ausgewählt wurden. Auf diese Weise vereinfacht sich sowohl die Ursachenforschung als auch die Fehlerbehebung signifikant und es können evtl. vorhandene Prozessdefekte oder auch akute Ausfälle behoben werden. Die Unterschriftserfordernisse können dabei an Prozessinhalte bzw. an die Art der Prozessabweichungen geknüpft sein, so dass z.B. bei Ausfällen von gleichzeitig mehreren Anlagenteilen neben den jeweils zuständigen Anlagenverantwortlichen auch die vorgesetzte Leitung Kenntnis erlangt und per digitaler Unterschrift zu bestätigen hat.

Es hat sich gezeigt, dass vor allem die Rückwirkungen (Steuerungen und Regelungen) auf die Anlage zur Erzeugung und/oder Bereitstellung von Energie überaus präzise und effiziente Eingriffe in laufende Prozesse, in der Prozessvorbereitung und/oder Prozessnachbereitung in der Anlage von einem fernliegenden Ort (remote) ermöglichen. Das System schließt dabei eine manuelle vor Ort zu generierende Steuerung und Regelung von Prozessen in der Anlage zur Erzeugung und/oder Bereitstellung von Energie (oder Komponenten der Anlage) allerdings nicht aus. Im Gegenteil, einer der besonderen Vorteile ist, dass das System eine Symbiose bzw. Kombination aus manuellen und automatisierten Rückwirkungen auf die Anlage ermöglicht, wobei diese aufeinander abgestimmt sein können.

Die Steuerungen bzw. Regelungen können automatisiert, insbesondere von einer Aktionseinrichtung, oder aber durch eine manuelle Eingabe einer Person/Stelle mittels einer ihr zugeordneten Signiereinrichtung erzeugt werden. Gerade die Kombination aus manuellen Eingriffen und automatisierten Eingriffen führt zu einem hohen Maß an Flexibilität und Sicherheit des Systems. Aus diesem Grunde ist das System für viele Anwendungsfällen adaptierbar, sodass je nach Anforderungen automatisierte Steuerungen oder Regelungen oder aber manuelle (oder Kombinationen daraus) ermöglicht werden. Es kann dabei auch vorgesehen sein, dass eine manuelle Eingabe in einer Signiereinrichtung auch durch eine anschließende Analyse in der Aktionseinrichtung verifiziert wird. Der Aktionseinrichtung ist dabei eine hohe Relevanz zuzuschreiben, denn diese ermöglicht durch ihre Ausgestaltung vorteilhaft eine schnelle und umfassende Analyse der aufgenommenen Prozessgrößen und/oder des Informationswertes über ein Auslösungsereignis, worauf basierend in direkter Weise schon Steuerungs- bzw. Regelungsbefehle als eine Reaktion erzeugt und als ein Aktionsdatensatz der Auditoreinrichtung übermittelt werden kann. Je nach Anwendungsfall erzeugt die Aktionseinrichtung erst einen Aktionsdatensatz, nachdem sie Steuerungs- und/oder Regelungsbefehle in einem Antwortdatensatz durch die Signiereinrichtung erhalten hat. Der Aktionsdatensatz kann dabei in beiden Fällen unmittelbar der Auditoreinrichtung bereitgestellt werden, welche die im Aktionsdatensatz umfasste Befehle umsetzt. Dadurch erfüllt das erfindungsgemäße System besonders hohe Reaktionsgeschwindigkeit-, Sicherheits- und Qualitätsstandards (wobei mit "Qualität" vorzugsweise die Art der ausgesuchten Reaktionsbefehle gemeint ist).

Im Sinne der Erfindung ist unter einer Anlage zur Erzeugung und/oder Bereitstellung von Energie bevorzugt eine Anlage zur Erzeugung und Bereitstellung von Fernwärme zu verstehen. Als Fernwärme wird bevorzugt eine Wärmelieferung zur Versorgung von Gebäuden mit Raumwärme und Warmwasser bezeichnet. Der Transport der thermischen Energie erfolgt dabei bevorzugt in einem wärmegedämmten Rohrsystem, das überwiegend erdverlegt ist, teilweise können jedoch auch Freileitungen verwendet werden. Fernwärme versorgt insbesondere Wohngebäude neben Raumwärme auch mit Warmwasser, indem die Wärme von einem Erzeuger oder einer Sammelstelle zu den Verbrauchern geleitet wird. Als Wärmelieferanten in Fernwärmenetzen dienen bevorzugt mit fossilen Brennstoffen, Biomasse oder Müll befeuerte Heizkraftwerke und Blockheizkraftwerke. Diese werden dabei bevorzugt in einer Kraft-Wärme-Kopplung betrieben und können auf diese Weise Brennstoffeinsparungen gegenüber einer separaten Strom- und Wärmeerzeugung erzielen. Zudem kann bevorzugt auch Abwärme aus Industrieprozessen, geothermische Energie, solarthermische Energie (Solare Fernwärme) und mittels Großwärmepumpen nutzbar gemachte Umweltwärme in Fernwärmesysteme eingespeist werden. Eine Anlage zur Erzeugung und Bereitstellung von Fernwärme (auch als Fernwärmesystem zu bezeichnen) umfasst bevorzugt verschiedene Hauptkomponenten. Hierzu zählen insbesondere die Wärmeerzeugungsanlagen (häufig in Kraft-Wärme-Kopplung betriebene Heizkraftwerke), das meist mit Heißwasser betriebene Fernwärmenetz samt Pumpstationen und Hausanschlüsse sowie die Übergabestationen, die die Wärme an die Gebäudeheizung abgeben.

Fernwärmenetze verfügen über die vorteilhafte Eigenschaft, sehr flexibel eine Vielzahl unterschiedlicher Wärmequellen nutzen zu können, die sowohl zentral als auch dezentral sein können. Bevorzugt erfolgt die Erzeugung von Fernwärme in großen Kraftwerken mit Kraft-Wärme-Kopplung (KWK), kleineren Blockheizkraftwerken, in Müllverbrennungsanlagen oder Fernheizwerken. Als Brennstoff werden bevorzugt die verschiedenen Formen der Kohle, Erdgas, Biogas, Öl, Holz und Holzprodukte, Solarthermie sowie Müll in verschiedenen Zusammensetzungen und Aufbereitungsformen verwendet.

Als Anlage zur Erzeugung und/oder Bereitstellung von Energie kann ebenso bevorzugt ein Energiekraftwerk als solches (bevorzugt zur Stromerzeugung) zu verstehen sein. Bei einem Kraftwerk wird bevorzugt mechanische Energie mittels Generatoren in elektrische Energie gewandelt, die in das Stromnetz eingespeist wird. Die mechanische Energie zum Antrieb der Generatoren stammt ihrerseits bevorzugt aus kinetischer Energie (Wasser- und Windkraftwerk) oder thermischer Energie (über beispielsweise Dampfturbinen, Gasturbinen oder ORC-Turbinen). Die thermische Energie stammt dabei bevorzugt aus Sonnenstrahlungsenergie (Sonnenwärmekraftwerk), geothermischer Energie (Geothermiekraftwerk), chemischer Energie (Verbrennung von Kohle (Kohlekraftwerk), Erdöl (Ölkraftwerk), Erdgas (Gaskraftwerk), Biomasse (Biomassekraftwerk), Müll oder Kernenergie (Kernkraftwerk), evtl. künftig Kernfusion. In einer weiteren bevorzugten Ausführungsform ist das Energiekraftwerk aus vielen gleichartigen kleinen Einheiten ausgestaltet, bspw. Photovoltaikanlagen. Auch sie können bevorzugt als Kraftwerke bezeichnet werden, obwohl sie keine beweglichen Teile enthalten und daher kinetische Energie nicht als Energieform in der Umwandlungskette vorkommt.

Es ist im Sinne der Erfindung bevorzugt, dass die Erfassungseinrichtung mindestens einen Sensor oder ein Sensorsystem umfasst. Ein Sensor kann physikalische (z.B. Wärmemenge, Temperatur, Feuchtigkeit, Druck, Schallfeldgrößen, Helligkeit, Beschleunigung) oder chemische (z. B. pH-Wert, lonenstärke, elektrochemisches Potential, Analysemethoden, wie z.B. spektraloder mikrobiologisch) Eigenschaften und/oder die stoffliche Beschaffenheit seiner Umgebung qualitativ oder als Messgröße quantitativ ermitteln. Diese Größen werden mittels physikalischer oder chemischer Effekte erfasst und in ein weiter verarbeitbares elektrisches Signal umgewandelt. In einer bevorzugten Ausgestaltung umfasst die Erfassungseinrichtung einen Sensor ausgewählt aus der Gruppe umfassend: Temperatursensor, Wegsensor, Drucksensor (Kraftsensor), Beschleunigungssensor, Bildsensor, Berührungssensor, Feuchtesensor, GPS-Sensor, NFC-Sensor, RFID-Sensor, Analysesensor, Luftgütesensor, Stromsensor, Neigungssensor, Dehnungssensor, Durchflusssensor, Füllstandsensor, Gassensor, Lichtsensor, Strahlungsdetektor, Schallsensor.

Die Sensoren der Erfassungseinrichtung sind dazu eingerichtet, anlagenbezogene Prozessgrößen automatisch zu erfassen, welche bevorzugt eine Zustandsinformation und/oder eine Betriebsinformation einzelner Anlagenkomponenten und/oder Anlagenprozesse umfassen. Die Kombination aus allen Informationen ergibt bevorzugt eine umfassende Gesamtinformation, aus der insbesondere sehr detaillierte Erkenntnisse über die Anlage zur Erzeugung und/oder Bereitstellung von Energie als solche sowie ihrer umfassten Komponenten und der erzeugten Energie gewonnen werden.

Die Erfassungseinrichtung kann im Sinne der Erfindung auch in mehrere Erfassungseinrichtungen unterteilt werden, wobei die jeweiligen Erfassungseinrichtungen unterschiedliche Sensoren umfassen. In einer bevorzugten Ausführungsform umfasst die Erfassungseinrichtung einen Speicher und einen Prozessor. Dadurch kann die Erfassungseinrichtung die erfassten Informationen einer Vorbearbeitung unterziehen. Dies kann beispielsweise eine erste Analyse oder eine Filterung der aufgenommenen Daten aufweisen, wodurch die Auditoreinrichtung vorteilhaft weniger Leistung zur Datenverarbeitung sowie Speicher benötigt.

Die erfindungsgemäße Auditoreinrichtung ist bevorzugt als eine Datenverarbeitungseinheit zu sehen. Sie umfasst vorzugsweise Mittel zum Erzeugen, Verarbeiten, Speichern, Senden und Empfangen von Daten. Die Auditoreinrichtung steht bevorzugt mit der Erfassungseinrichtung, der Aktionseinrichtung und einem Berichtsgenerator in Datenverbindung, wodurch Daten zwischen diesen Systemkomponenten bidirektional übertragen werden können. In einer bevorzugten Ausführungsform führt die Auditoreinrichtung Algorithmen und Berechnungen aus, indem sie von den Erfassungseinrichtungen Input-Daten erhält und nach Ausführung der Algorithmen Output-Daten generiert, die bevorzugt an die Aktionseinrichtung und/oder den Berichtsgenerator übertragen werden. Der Vorteil einer solchen Anordnung ist, dass die Erfassungseinrichtung nicht mit Komponenten zur Datenverarbeitung (Prozessor) und Datenspeicherung bestückt werden muss. Ein weiterer Vorteil ist, dass die Auditoreinrichtung für ihre Analyse bzw. Durchführung der Algorithmen eine Vielzahl von aufgenommenen Daten von verschiedenen Erfassungseinrichtungen miteinbeziehen kann, sodass eine weitreichende Analyse ermöglicht wird.

Anhand der aufgenommenen Prozessgrößen kann die Auditoreinrichtung ein Auslösungsereignis erkennen. Im Sinne der Erfindung ist ein Auslösungsereignis bevorzugt als ein Ereignis zu verstehen, welches eine Diskrepanz zwischen einem tatsächlichen Ereignis und einem eigentlich erwarteten und/oder geplanten Ereignis darstellt, sodass eine Mitteilung an verantwortliche Entitäten (Personen oder Stellen) und/oder eine Handlung (als Reaktion) erfordert wird. Bevorzugt ist ein Auslösungsereignis auch als ein sogenannter "Trigger" zu verstehen. Ein Auslösungsereignis kann zudem bevorzugt zeitabhängig sein, sodass zum Beispiel bestimmte aufgenommene Prozessparameter als "Meilensteine" in verschiedenen Zeitabständen an verantwortliche Entitäten (Stellen/Personen) gelangen können. Ein Auslösungsereignis kann zum Beispiel eine Über- oder Unterschreitung eines Temperaturschwellenwertes, eine Überlastung eines Generators, ein Ventilschaden, eine Leckage in einem Rohrleitungssystem, ein Mangel an Brennstoff oder eine falsche Ausrichtung von Photovoltaikmodulen (in Relation zu einer Sonneneinstrahlung) darstellen. Die Analyse zur Erkennung eines Auslösungsereignisses kann zum Beispiel auf Algorithmen der künstlichen Intelligenz basieren oder aber auch auf einem einfachen Vergleich zwischen aufgenommenen Werten mit Referenzwerten oder anderweitigen Algorithmen.

Ferner ist die Auditoreinrichtung bevorzugt konfiguriert, um einen ersten Datensatz zu generieren. Ein Datensatz ist bevorzugt als zusammengefasste Daten in Datenbanken oder in Dateien gespeichert. Bevorzugt ist der Datensatz in einem Dateiformat gespeichert ausgesucht aus der Gruppe umfassend PDF, JSON, XML, CSV. PDF-Dateien zeichnen sich durch sehr universelle Verwendbarkeit auf unterschiedlichen Datenverarbeitungssystemen aus, während einer der großen Vorteile von JSON-Dateien die Einfachheit der Implementierung und der Anwendung ist. Aufgrund des einfachen Aufbaus benötigen JSON-Dateien bei der Anwendung nicht viele Ressourcen. So können umfangreiche Daten in einer annehmbaren Zeit ausgewertet werden. Das XML-Format kann vorteilhaft ohne große Aufwendungen an andere Systeme angebunden werden, sodass eine besonders gute Kompatibilität besteht. Für die langfristige Dateiablage ist XML ebenso vorteilhaft geeignet und XML kann zudem einfach in andere Dateiformate gewandelt werden. Das CSV - Dateiformat ist vorteilhaft vielseitig nutzbar. Der große Vorteil des CSV-Formats liegt weiterhin in der leichten Übertragbarkeit, wie zum Beispiel den Import in unterschiedliche Datenbanken oder Programmen. In bereits bestehenden Datenbanken können Inhalte aus CSV-Dateien vielfach eingelesen werden. Es ist insbesondere dann vorteilhaft, wenn unterschiedliche Datenquellen (zum Beispiel Daten aus verschiedenen Erfassungseinrichtungen) zu einem einzigen Datenbestand zusammengefasst werden sollen.

In einer bevorzugten Ausführungsform werden sensorspezifische Rohdaten und/oder vorbereitete bzw. verarbeitete Rohdaten durch die Erfassungseinrichtung an die Auditoreinrichtung übermittelt, welche diese Daten analysiert und einen Informationswert über anlagenbezogene Prozessgrößen und/oder einem Auslösungsereignis in die oben genannten Dateiformate abspeichert. Es ist demnach möglich, dass die Auditoreinrichtung eine Bilddatei erhält und diese in abstrahierten Informationen, in eine XML oder CSV Datei wandelt. Der Vorteil an diesem Vorgehen ist der, dass die Rohdaten und/oder vorbereiteten bzw. bearbeiteten Rohdaten der Erfassungseinrichtungen in eine Form konvertiert werden, welche eine Vielfach geringere Speicherkapazität benötigen und zusätzlich alle weiteren oben genannten Vorteile der Dateiformate in Anspruch nehmen. Der Informationsverlust durch die Abstraktion führt zu keinen Nachteilen in den weiteren Verfahrensabläufen der vorgeschlagenen Erfindung.

Ein Datenobjekt kann bevorzugt als ein Überbegriff für Datensätze, Formeln, Analyseobjekte und Datenverknüpfungsobjekte, also für alle Objekte, die Daten enthalten bzw. ein Berechnungsergebnis liefern aufgefasst werden. Im Sinne der Erfindung umfasst ein Datenobjekt bevorzugt ein oder mehrere Datensätze.

Die zu verwendenden Dateiformate sind nicht unerheblich für das vorgeschlagene System, denn diese haben einen Einfluss auf die Berechnungsgeschwindigkeit, den Speicher sowie die Übertragungsgeschwindigkeit. Die Wechselwirkung der Dateiformate mit der Auditoreinrichtung, der Aktionseinrichtung, dem Berichtsgenerator, der Erfassungseinrichtung und/oder der Signiereinrichtung tragen unter anderem zum technischen Charakter der Erfindung bei. Es hat sich ferner gezeigt, dass insbesondere die anlagenbezogenen Prozessgrößen sowie ein Informationswert über ein Auslösungsereignis besonders gut in vorgenannten Dateiformaten zu speichern sind, ohne relevante Informationsverluste in Kauf nehmen zu müssen.

Die Aktionseinrichtung kann dem erhaltenen Datenobjekt bevorzugt eine Signiereinrichtung zuordnen bzw. eine zuständige Signiereinrichtung ermitteln. Entsprechend umfasst die Aktionseinrichtung vorzugsweise Mittel zum Erzeugen, Verarbeiten, Speichern, Senden und Empfangen von Daten. Die Zuordnung erfolgt insbesondere auf Basis des im Datenobjekt umfassten Informationswertes über das Auslösungsereignis und/oder auf Basis einer im Datenobjekt umfassten Prozessgröße und/oder auf Basis einer Auswertung der erhaltenen Informationswerte und/oder Prozessgrößen. Hierbei hat die Aktionseinrichtung bevorzugt Zugriff auf eine Datenbank, welche alle Signiereinrichtungen mit ihren Adressierungsinformationen umfasst. Diese Datenbank kann entweder auf einem externen Server vorliegen oder im Aufbau der Aktionseinrichtung - also in einem Speicher - selbst vorliegen. Bevorzugt wird aus der Datenbank eine zuständige Signiereinrichtung für den Informationswert des Datenobjektes ermittelt.

Weiterhin bevorzugt erhält die Aktionseinrichtung einen Antwortdatensatz einer Signiereinrichtung. Die Aktionseinrichtung und die Signiereinrichtung können bevorzugt auf einem gemeinsamen Endgerät umfasst sein oder aber stärker bevorzugt voneinander separiert als eigenständige Vorrichtungen vorliegen. Es ist zudem bevorzugt, dass der Antwortdatensatz mit einer Signatur zur Aktionseinrichtung übermittelt wird. Die Aktionseinrichtung ist dabei in der Lage die Signatur auszulesen oder zu verifizieren. Anschließend erzeugt die Aktionseinrichtung einen Aktionsdatensatz und übermittelt den Aktionsdatensatz in direkter Weise an die Auditoreinrichtung. Es ist ebenso bevorzugt, dass der Antwortdatensatz, den die Aktionseinrichtung von der Signiereinrichtung erhält, noch keine Signatur umfasst, sodass die Aktionseinrichtung den Aktionsdatensatz - nach seiner Erstellung auf Basis des Antwortdatensatz - an die Signiereinrichtung zurück übermittelt. Diese wiederum würde erst anschließend dem Aktionsdatensatz eine Signatur beifügen und an die Aktionseinrichtung zurück übermitteln, welche den signierten Aktionsdatensatz der Auditoreinrichtung bereitstellt

Darüber hinaus kann die Aktionseinrichtung das erhaltene Datenobjekt der Auditoreinrichtung (oder des Berichtsgenerators) bevorzugt in ein speziell für die zugeordnete Signiereinrichtung lesbares Dateiformat konvertieren. Dies führt vorteilhaft dazu, dass Signiereinrichtungen jeweils als unterschiedliche Endgeräte mit vorzugsweise unterschiedlich auslesbaren Dateiformaten ausgestaltet sein können. Zum Beispiel kann eine sicherheitsrelevante Information, wie bspw. ein ausgebrochenes Feuer in der Anlage zur Erzeugung und/oder Bereitstellung von Energie einer Signiereinrichtung übermittelt werden, welche zum Beispiel eine Leitstelle für ein Notrufsystem darstellt, wobei diese Leitstelle alle erhaltenden Informationen über einen PC-Desktop erhält. Simultan ermöglicht das vorgeschlagene System, dass eine weitere Entität, eine verantwortliche Person/Stelle (zum Beispiel der verantwortliche Oberingenieur), diese Information erhält, wobei ein anderes Endgerät, bspw. ein Smartphone, genutzt wird.

In einer weiteren bevorzugten Ausführungsform ist die Aktionseinrichtung einer von der Auditoreinrichtung sowie der Signiereinrichtung örtlich separierten Servereinheit umfasst, wobei die Aktionseinrichtung mit der Auditoreinrichtung und der Signiereinrichtung in Datenverbindung steht. Der Vorteil einer solchen Anordnung ist unter anderem darin zu sehen, dass das System dezentral ausgestaltet ist, sodass bei einem Ausfall einzelner Komponenten, wie die Aktionseinrichtung und/oder die Auditoreinrichtung, die einzelnen Komponenten für sich genommen ausgetauscht bzw. ersetzt oder repariert werden können, ohne dabei das gesamte System ersetzen zu müssen. Eine Aktionseinrichtung, welche auf einem dezentral angeordneten Server vorliegt, kann vorteilhaft in Datenverbindung mit mehreren Auditoreinrichtungen verschiedener Systeme stehen, sodass sich mehrere erfindungsgemäße Systeme die gleiche Aktionseinrichtung "teilen".

In einer weiteren bevorzugten Ausführungsform generiert die Aktionseinrichtung einen Anforderungsdatensatz, welcher eine Signaturanforderung und mindestens einen Teil des Datenobjektes umfasst. Der Anforderungsdatensatz ist bevorzugt - entsprechend der zugeordneten Signiereinrichtung - in einem Format gespeichert (und wird in diesem übertragen), welches kompatibel zur zugeordneten Signiereinrichtung ist. Die Zuordnung der Signiereinrichtung zu einem Datenobjekt kann bevorzugt auf Algorithmen der künstlichen Intelligenz erfolgen oder aber auf einem im Datenobjekt - durch die Auditoreinrichtung eingebrachten - umfassten Zuordnungswert bzw. einer Zuordnungsinformation. In diesem Kontext wird die Zuordnung insbesondere in der Auditoreinrichtung bewerkstelligt, wobei die Aktionseinrichtung den Zuordnungswert bzw. die Zuordnungsinformation aus dem ersten Datenobjekt extrahiert und eine Adressierung für eine Signiereinrichtung ermittelt und darüber hinaus noch einen Anforderungsdatensatz erstellt. Der Anforderungsdatensatz weist bevorzugt eine Signaturanforderung über mindestens einen Teil des Datenobjektes auf. Die Signaturanforderung kann bevorzugt ein Maß für die Relevanz des Auslösungsereignisses und/oder der aufgenommenen anlagenbezogenen Prozessgrößen sein. Je relevanter bzw. kritischer eine Information umso größer ist die Anforderung an eine Signatur.

Eine Signatur ist im Sinne der Erfindung auch als eine elektronische Signatur zu verstehen. Elektronische Signaturen sind bevorzugt mit elektronischen Informationen verknüpfte Daten, mit denen ein Unterzeichner bzw. Signaturersteller identifiziert und die Integrität der signierten elektronischen Informationen geprüft werden kann. In der Regel handelt es sich bei den elektronischen Informationen um elektronische Dokumente. Die elektronische Signatur erfüllt somit technisch gesehen den gleichen Zweck wie eine eigenhändige Unterschrift auf einem Papierdokument.

Eine digitale Signatur wird bevorzugt mittels eines kryptographischen Verfahrens erzeugt, bei dem ein Signierer eines elektronischen Dokuments aus dem Dokument mit einem entsprechenden Algorithmus einen Nachrichtenkern erzeugt und diesen Nachrichtenkern dann mit seinem geheimen Schlüssel verschlüsselt, um eine digitale Signatur zu generieren. Die digitale Signatur wird dann zusammen mit dem Dokument übermittelt. Der Empfänger kann aus dem erhaltenen Dokument mit demselben Algorithmus ebenfalls einen Nachrichtenkern erzeugen und anhand eines Schlüssels des Signierers die Signatur entschlüsseln, um so den Nachrichtenkern aus der Signatur zu erhalten. Stimmt der Nachrichtenkern aus der Signatur mit dem aus dem erhaltenen Dokument erzeugten Nachrichtenkern überein, wurde das Dokument nicht verändert. Typischerweise müssen der Signierer und der Empfänger ein entsprechendes Schlüsselpaar, entsprechende Zertifikate und entsprechende Algorithmen in einer lokalen Infrastruktur vorhalten, um solche digitalen Signaturen erzeugen zu können.

Digitale Signaturen sind bevorzugt in drei Kategorien einzuteilen, nämlich "einfache elektronische Signatur", "fortgeschrittene elektronische Signatur" und "qualifizierte elektronische Signatur". Die einfache elektronische Signatur hat dabei bevorzugt keine besonderen Anforderungen. Dokumente können ohne Identitätsprüfung oder Zustimmung elektronisch signiert werden. Sie gilt auch ohne Angabe des Urhebers oder Absenders als digitale Signatur. Beispiele für eine solche einfache Signatur sind folgende: PDF mit eingescannter Unterschrift; Unterschrift auf elektronischen Terminals; E-Mail mit Namen. Die fortgeschrittene elektronische Signatur ist hingegen bereits deutlich sicherer. Sie muss strenge Anforderungen der Identitätsprüfung erfüllen und hat folglich eine höhere Beweiskraft als die einfache Signatur. Eine fortgeschrittene elektronische Signatur wird bevorzugt mit einem geheimen Signaturschlüssel erstellt, der eindeutig und nachvollziehbar mit dem Unterzeichner verbunden ist. Den privaten Signaturschlüssel muss der Inhaber unter "alleiniger Kontrolle" haben. Die Identifizierbarkeit des Signaturerstellers erfolgt durch Attribute, die eine Registrierungsstelle für Zertifikate prüfen muss. Die "qualifizierte elektronische Signatur" ist bevorzugt eine elektronische Signatur, die auf einen Zeitpunkt ihrer Erzeugung gültigen qualifizierten Zertifikat beruht und mit einer sicheren und vertrauenswürdigen Signaturerstellungseinheit - zum Beispiel Signaturkarte oder eine Kombination aus Signature Activation Module und HSM - erstellt wurde.

Die Aktionseinrichtung sowie die Signiereinrichtung weisen bevorzugt Mittel auf, die eine Nachricht bzw. einen Datensatz und/oder ein Datenobjekt und/oder Datei mit einer versehenen Signatur erzeugen und/oder lesen können. Das heißt entsprechende Zertifikate und Algorithmen, wie auch Schlüssel, liegen bevorzugt in einer lokalen Infrastruktur der Systemkomponenten (der Aktionseinrichtung und der Signiereinrichtung) vor. Hierbei können Signaturen aller drei Kategorien verwendet werden. Je nach Relevanz des Auslösungsereignisses und/oder der aufgenommenen Prozessgrößen ist von einer hohen oder geringen Anforderung an eine Signatur auszugehen. Die Aktionseinrichtung kann bevorzugt durch eine Analyse die Entscheidung der Relevanz selbst treffen, oder diese Entscheidung wird durch die Auditoreinrichtung ermittelt, sodass diese Information mit dem ersten Datensatz an die Aktionseinrichtung übermittelt wird. Die Relevanz wird bevorzugt über Algorithmen der künstlichen Intelligenz ermittelt.

Die erfindungsgemäße Aktionseinrichtung weist eine Vielzahl von Vorteilen auf, welche so in dieser Art und Weise noch nicht, insbesondere im Kontext einer Anlage zur Erzeugung und/oder Bereitstellung von Energie, im Stand der Technik bekannt waren. Zum einen stellt die Aktionseinrichtung vorteilhaft sicher, dass eine "richtige" Signiereinrichtung für ein spezifisches Auslösungsereignis und/oder Prozessgrößen ausgewählt wird. So wird gewährleistet, dass Informationen ausschließlich an die für diese relevanten Signiereinrichtung, verantwortliche Stellen und/oder Personen, übermittelt werden. Daraus resultierend kann die erhaltene Information von der Signiereinrichtung unmittelbar bearbeitet und signiert werden, ohne die Information unter Umständen weiter leiten zu müssen, weil die Signiereinrichtung nicht verantwortlich für diese Information ist. Ferner ist die Aktionseinrichtung bevorzugt in der Lage, für den Informationswert über das Auslösungsereignis und/oder einer Prozessgröße eine bestimmte Relevanz oder Priorisierung zu bestimmen, indem es für die Information einen spezifischen Anforderungsdatensatz mit einer bestimmten Anforderung an eine Sicherheitsstufe und/oder Sicherheitskette erzeugt.

Erfindungsgemäß ist die Aktionseinrichtung bevorzugt dazu eingerichtet, einen Aktionsdatensatz zu erzeugen und diesen der Auditoreinrichtung bereitzustellen. Der Aktionsdatensatz umfasst bevorzugt Steuerungs- und/oder Regelungsbefehle die von der Auditoreinrichtung so verarbeitet werden können, sodass diese anlagenbezogene Prozesse steuern und/oder regeln kann. Der Aktionsdatensatz umfasst bevorzugt Steuerungs- oder Regelungsbefehle die als eine Reaktion auf ein Auslösungs-, Eintritts- und/oder Vorhersageereignis anzusehen sind und eine Handlung widerspiegeln.

In einer bevorzugten Ausführungsform ist die Signiereinrichtung einer Stelle und/oder Person zugeordnet. Zum Beispiel ist die Stelle eine Einrichtung ausgesucht aus der Gruppe umfassend Notruf-Leitstelle; Krankenhaus; Behörde (Bundesnetzagentur, Ordnungsamt, Gesundheitsamt, Arbeitsamt); unterschiedliche Abteilungen in einem Unternehmen, welches bevorzugt die Anlage zur Erzeugung und/oder Bereitstellung von Energie betreiben (z.B. Personalabteilung, Geschäftsführung, Finanzabteilung, verantwortliches Fachpersonal); Zulieferbetrieb. Eine Person kann zum Beispiel in einem Bereich der genannten Stellen arbeiten und/oder Tätigkeiten ausüben, die unmittelbar mit der Anlage zur Erzeugung und/oder Bereitstellung von Energie in Verbindung stehen, wie zum Beispiel ein Servicetechniker, ein Oberingenieur oder ein Rohrleitungsbauer. So kann zum Beispiel bei Bauteilausfällen oder dem-r Erfordernis von Technikereinsätzen die Möglichkeit zur direkten rechtsverbindlichen Beauftragung mithilfe des beschriebenen Unterschriftsprozesses gegeben werden.

Bevorzugt gelangt die Information über ein Auslösungsereignis und/oder Prozessgrößen an eine der oben genannten für diese Information verantwortliche Stelle und/oder Person. Die Signiereinrichtung ist dabei bevorzugt als ein Endgerät ausgestaltet, ausgesucht aus der Gruppe umfassend: Smartphone, Tablet PC, Desktop-PC, Notebook, Pager, internetfähiges Multimediagerät. Bevorzugt ist das Endgerät eine internetfähige Datenverarbeitungseinheit, welche dazu eingerichtet ist, die Informationen visuell und/oder akustisch unmittelbar darzustellen. Wie eingangs erläutert, kann die Signiereinrichtung bzw. das Endgerät eine elektronische Signatur über mindestens einen Teil des Anforderungsdatensatzes erzeugen. Hierfür weist die Signiereinrichtung bevorzugt Mittel auf, welche eine solche Signatur möglich machen. Hierbei können Zertifikate, Mittel zur Verschlüsselung in lokalen Daten auf dem Endgerät umfasst sein. Es kann in alternativen Ausführungen allerdings ebenso bevorzugt sein, dass die Signiereinrichtung auf einem externen Server, wie eine Cloud, zugreift, um eine Signatur erzeugen zu können.

In einer weiteren bevorzugten Ausführungsform ist das System dadurch gekennzeichnet, dass das System einen Berichtsgenerator umfasst,
- wobei der Berichtsgenerator Auswertungsanwendungen umfasst und dazu eingerichtet ist,
(i) die aufgenommenen Prozessgrößen und/oder den Informationswert über das Auslösungsereignis zu analysieren;
(ii) ein Muster, ein Eintrittsereignis, ein Vorhersageereignis und/oder eine Handlungsoption zu erkennen;
(iii) den ersten Datensatz mit einem Informationswert über ein Muster, ein Eintrittsereignis, ein Vorhersageereignis und/oder eine Handlungsoption zu ergänzen und/oder einen zweiten Datensatz mit einem Informationswert über ein Muster, ein Eintrittsereignis, ein Vorhersageereignis und/oder eine Handlungsoption zu erstellen und den ersten und/oder zweiten Datensatz der Aktionseinrichtung als Datenobjekt bereitzustellen.

Die vorgenannte Ausführungsform des erfindungsgemäßen Systems, insbesondere das Aufweisen eines Berichtsgenerators führt dazu, dass die aufgenommenen anlagenbezogenen Prozessgrößen und/oder der Informationswert über das Auslösungsereignis einer weiteren detaillierten Analyse unterzogen werden können, wodurch weitere für das System wertvolle Erkenntnisse erhalten werden, die eine bestmögliche automatisierte Reaktion auf ein Auslösungsereignis und/oder aufgenommene Prozessgrößen ermöglichen. In diesem Zusammenhang werden bevorzugt computerimplementierte Analysealgorithmen durch die in einem Berichtsgenerator umfassten Auswertungsanwendungen ausgeführt. Der Berichtsgenerator kann dadurch (insbesondere weil die Auswertungsanwendungen bevorzugt Algorithmen der künstlichen Intelligenz umfassen) vorteilhaft ein Muster, ein Eintrittsereignis, ein Vorhersageereignis und/oder eine Handlungsoption erkennen. Der Berichtsgenerator kann dadurch vorteilhaft überaus große Datenmengen in einer sehr kurzen Zeit automatisiert analysieren, wobei Muster und/oder Merkmale in einer Datenmenge erkannt werden, die von einem Menschen nicht erkannt werden können. Dies führt insbesondere dazu, dass die KI bzw. die Auswertungsanwendungen und/oder der Berichtsgenerator ein Eintrittsereignis, ein Vorhersageereignis frühzeitig (durch Analyse der aufgenommenen Prozessgrößen unter anderem auch zeitlich vor dem eigentlichen Auftreten eines Auslösungsereignisses) erkennen kann und darauf basierend eine bestmögliche Handlungsoption generiert.

Bei akuten Anlagenstörungen oder auch bei Predictive Maintenance Erfordernissen, d.h. wenn durch den Berichtsgenerator auf Basis der Auswertung von Prozess-/Betriebsparametern notwendige Wartungsaktivitäten zur Vermeidung drohender Ausfälle erkannt werden, kann beispielsweise der Austausch eines bestimmten Bauteils in Zusammenwirkung mit einer zeitlich befristeten Vergabe einer Zugangsberechtigung (Einmalcode) für eine definierte Personal-ID als Handlungsoption vorgeschlagen werden. Bei Bestätigung durch die erforderlichen Signaturen bzw. Signiereinrichtungen erfolgt einerseits eine automatisierte rechtssichere Beauftragung des Technikereinsatzes ggf. mit Bestellung der erforderlichen Ersatzteile und andererseits wird über die Aktionseinrichtung der betroffene Anlagenteil für den befristeten Zugang des definierten Technikers (auf Basis seiner Personal-ID) freigegeben. Alle Vorgänge in diesem Zusammenhang werden bevorzugt mit einem Zeitstempel dokumentiert und archiviert.

Es können auch Modifikationen von seiten des Berichtsgenerators vorgeschlagenen Fehlerbehebungsaktionen durch die auf die Auswertungsanwendungen einwirkenden Zustandsparametern veranlasst werden. So ist es beispielsweise denkbar, dass eine vorgeschlagene Durchführung einer Predictive Maintenance verschoben wird, weil der Kundenversorgungsvertrag in absehbarer Zeit ausläuft oder auch weil die Energieversorgung durch einen anderen im Verbund befindlichen Energieversorger übernommen werden wird.

In einer bevorzugten Ausführungsform weist der Berichtsgenerator Mittel zum Erzeugen, Verarbeiten, Speichern, Senden und Empfangen von Daten auf. In diesem Bezug erhält der Berichtsgenerator mindestens eine der aufgenommenen Prozessgrößen und/oder den Informationswert über das Auslösungsereignis von der Auditoreinrichtung. Der Berichtsgenerator und die Aktionseinrichtung können bevorzugt auf einem gemeinsamen Endgerät umfasst sein oder aber stärker bevorzugt voneinander separiert als eigenständige Vorrichtungen vorliegen. Es ist zudem bevorzugt, dass der Berichtsgenerator die erhaltenen Daten der Auditoreinrichtung analysiert und darauf basierend ein Datenobjekt erzeugt und an die Aktionseinrichtung übermittelt.

Als eine Handlungsoption ist im Sinne der Erfindung bevorzugt eine Information zu verstehen, welche zum Beispiel die Art einer Reaktion bzw. Handlung auf das Auslösungsereignis, das Eintrittsereignis und/oder das Vorhersageereignis vorschlägt. So kann eine Handlungsoption beispielsweise der Vorschlag des Einsatzes eines Technikers, eines Ventilverschlusses und/oder einen Einsatz einer Rettungseinheit (bspw. Feuerwehr) umfassen. Eine Information über eine Handlungsoption ermöglicht der Aktionseinrichtung oder auch einer Signiereinrichtung bzw. ihrer zugeordneten verantwortlichen Stelle und/oder Person ein oder mehrere Vorschläge für ein weiteres Vorgehen insbesondere eine Reaktion anzubieten. Die Handlungsoptionen sind bevorzugt derart ausgereift, dass ihnen ohne weitere Überlegungen oder Berechnungen Folge geleistet werden kann und die Signiereinrichtung und/oder die Aktionseinrichtung bevorzugt einen Befehl (Antwortdatensatz und/oder Aktionsdatensatz) generieren, welche eine Handlung ausgesucht aus diesen Handlungsoption umfasst. Weiterhin kann eine Handlungsoption quantitätsbezogene Information umfassen, wobei diese bevorzugt eine Information über eine Anzahl von Ereignissen und/oder Kosten aufweisen. Entsprechend weist eine quantitätsbezogene Information über eine Handlungsoption eine Information über mengenmäßige und oder zahlenmäßige Merkmale auf.

Im Sinne der Erfindung ist ein Vorhersageereignis bevorzugt als ein Ereignis zu verstehen, welches ausgehend von einem Zeitpunkt in einer Zukunft liegt (bevorzugt ausgehend von dem Zeitpunkt, in welchem die Erfassungseinrichtung die anlagenbezogenen Prozessgrößen aufnimmt). Es handelt sich dabei bevorzugt nicht unbedingt nur um ein bestimmtes einzelnes Ereignis, sondern ein Vorhersageereignis kann sich auch auf einen zukünftigen Verlauf beziehen. Die Auswertungsanwendungen können dabei bevorzugt anhand einer Analyse der aufgenommenen anlagenbezogenen Prozessgrößen ein zukünftiges Ereignis oder einen zeitlichen Ereignisverlauf vorhersagen (Vorhersageereignis). Ein Vorhersageereignis kann bevorzugt auch ein Ereignis vorhersagen, welches ein Auslösungsereignis und/oder ein Eintrittsereignis darstellt.

Ein Eintrittsereignis ist hingegen als ein Ereignis zu verstehen, welches zum Zeitpunkt der Aufnahme der Prozessgrößen eingetroffen ist. Es kann demnach in einem unmittelbaren Zusammenhang mit einem Auslösungsereignis stehen oder auch ein Auslösungsereignis darstellen. Bevorzugt ist das Eintrittsereignis schwieriger zu erkennen - im Vergleich zu einem Auslösungsereignis, sodass weitergehende detaillierte Analysen für die Erkennung eines solchen Eintrittsereignis nötig sind.

In einer bevorzugten Ausführungsform erhält die Aktionseinrichtung ein Datenobjekt vom Berichtsgenerator, wobei das Datenobjekt den ersten Datensatz mit einem Informationswert über ein Muster, ein Eintrittsereignis, ein Vorhersageereignis und/oder eine Handlungsoption und/oder einen zweiten Datensatz mit einem dieser Informationswerte umfasst. Anschließend ordnet die Aktionseinrichtung bevorzugt dieses Datenobjekt einer Signiereinrichtung zu, wobei die Aktionseinrichtung die im Datenobjekt umfassten Informationswerte für eine bestmögliche Auswahl einer Signiereinrichtung mit einbezieht. Ebenso bevorzugt wird ein Anforderungsdatensatz und/oder ein Aktionsdatensatz durch die Aktionseinrichtung generiert, wobei der Informationswert über ein Muster, ein Eintrittsereignis, ein Vorhersageereignis und/oder eine Handlungsoption dafür berücksichtigt wird. Das heißt auf den Informationswerten basierend werden entsprechend ein optimaler Anforderungsdatensatz und/oder Aktionsdatensatz erzeugt. Je nach angebotener Handlungsoption kann demnach ein Anforderungsdatensatz erzeugt werden, der eine bestimmte Anforderung an eine Signatur (Signaturstufe, Signaturkette) aufweist. Zudem kann je nach angebotener Handlungsoption ein Aktionsdatensatz erzeugt werden, der Steuerungs- und Regelungsbefehle umfasst, welche die vorgeschlagene Handlung umsetzen.

In einer weiteren bevorzugten Ausführungsform ist das System dadurch gekennzeichnet, dass die Aktionseinrichtung dazu eingerichtet ist, den Antwortdatensatz an den Berichtsgenerator zu übermitteln, welcher den Antwortdatensatz archivieren kann. Es kann weiterhin auch bevorzugt sein, dass der Anforderungsdatensatz sowie der Aktionsdatensatz an den Berichtsgenerator übermittelt werden kann, welche dieser ebenfalls speichern und archivieren kann. Durch die Speicherung des Antwortdatensatzes sowie des Anforderungsdatensatzes und des Aktionsdatensatzes durch den Berichtsgenerator ermöglicht der beschriebene Unterschriftsprozess vorteilhaft eine rechtskonforme Archivierung aller Vorgänge. Wenn der Berichtsgenerator auf einem externen Server vorliegt (und/oder zumindest die Speicherung der Daten auf einem externen Server, wie einer Cloud erfolgt), wird ein nachträglicher Zugriff durch verschiedene - insbesondere eine Vielzahl - von Entitäten ermöglicht.

In einer weiteren bevorzugten Ausführungsform ist das System dadurch gekennzeichnet, dass die Aktionseinrichtung dazu eingerichtet ist, bei einer fehlenden Rückmeldung durch einen Antwortdatensatz, nach einem definierten Zeitintervall dem Datenobjekt eine weitere Signiereinrichtung zuzuordnen. Die Aktionseinrichtung übernimmt bevorzugt die Überwachung des Fortschritts in der Signaturkette, sodass bei fehlendem Fortschritt in einem festgelegten Zeitintervall auch alternative Unterschriftsoptionen ermittelt werden können. Darüber hinaus geht mit der Aktionseinrichtung der Vorteil einher, dass in jedem Fall sichergestellt wird, dass die relevante Information über das Auslösungsereignis und/oder Prozessgrößen und/oder ein Muster, ein Eintrittsereignis, ein Vorhersageereignis und/oder eine Handlungsoption eine zuständige Signiereinrichtung erreicht. Selbst, wenn eine Signiereinrichtung keine Rückmeldung, also keinen Antwortdatensatz an die Aktionseinrichtung übermittelt, wird bevorzugt nach einer vordefinierten Zeit (Zeitintervall) dem Datenobjekt eine weitere Signiereinrichtung zugeordnet. Die weitere Signiereinrichtung ist zwar nicht die erste Zuordnungswahl, sie kann aber in Bezug auf eine Stelle und/oder Person zugeordnet sein, die eine Mitverantwortung (Verantwortlichkeit) im Kontext des Auslösungsereignisses oder der Prozessgrößen oder des Eintrittsereignisses, des Vorhersageereignisses und/oder der Handlung aufweist.

In einer bevorzugten Ausführungsform ordnet die Aktionseinrichtung dem Datenobjekt eine weitere Signiereinrichtung zu, wenn sie in einem Zeitintervall von bevorzugt 1 min bis 48 h, stärker bevorzugt 10 min bis 24 h, besonders stark bevorzugt 15 min bis 5h insbesondere 30 min bis 2 h, keine Rückmeldung von der als erstes zugeordneten Signiereinrichtung erhält. Also wenn die Aktionseinrichtung nach dem benannten Zeitintervall keinen Antwortdatensatz erhält. Das vordefinierte Zeitintervall ist bevorzugt an die Relevanz des Auslösungsereignisses und/oder der anlagenbezogene Prozessgrößen und/oder Muster, Eintrittsereignis, Vorhersageereignis und/oder Handlungsoption (neu) zu bestimmen bzw. zu variieren. Durch Verfahren der künstlichen Intelligenz können aus der Vielzahl der vorliegenden verknüpften Prozessgrößen, wie eine Durchflussmenge von Wasser in einem Rohr, zeitliche Vorgaben für eine Freigabe von alternativen Prozessschritten abgeleitet werden, die dann zu den jeweils passenden bevorzugten zugeordneten Zeitintervallen für eine erforderliche Rückmeldung einer Signiereinrichtung führen. Dadurch wird eine Information über das Auslösungsereignis und/oder die anlagenbezogenen Prozessgrößen und/oder eine Information über ein Muster, ein Eintrittsereignis, ein Vorhersageereignis und/oder eine Handlungsoption in jedem Fall an eine zuständige Stelle und/oder Person geleitet, wobei vorteilhaft sichergestellt werden kann, dass diese Information auch wirklich gelesen/verarbeitet wurde. Es hat sich gezeigt, dass die so ermittelten, beschriebenen Zeitintervalle besonders gut für das erfindungsgemäße System geeignet sind.

Das erfindungsgemäße System umfasst demnach eine Überwachung des Fortschritts in der Signaturkette, so dass bei fehlendem Fortschritt in einem festgelegten Zeitintervall auch alternative Unterschriftsoptionen zur Ausführung gelangen können.

In einer weiteren bevorzugten Ausführungsform ist das System dadurch gekennzeichnet, dass die Signaturanforderung abhängig vom Auslösungsereignis, Muster, Eintrittsereignis, Vorhersageereignis und/oder der Handlungsoption ist und/oder eine Anforderung ist in Bezug auf:
a) eine Signaturstufe, die eine Sicherheitsstufe umfasst und/oder;
b) eine Signaturkette, die eine Erforderlichkeit einer Signatur von mindestens zweier Signiereinrichtungen umfasst.

Durch die Signaturanforderung kann die Aktionseinrichtung in vorteilhafter Weise bereits eine entsprechende Vorgabe hinsichtlich der aus ihrer Sicht mindestens erforderlichen Sicherheitsstufe der angeforderten Signatur machen, welche dann automatisch ohne weiteren Eingriff bzw. weitere diesbezügliche Eingaben der Signiereinrichtung (bzw. der zugeordneten Stellen und/oder Personen) verarbeitet werden kann. Hierdurch kann der Signaturprozess erheblich beschleunigt und vereinfacht werden. Dies ist in hohem Maße vorteilhaft für die Nutzerakzeptanz und Durchsetzung eines solchen Verfahrens zu rechtssicheren, intelligenten Steuerung von Prozessen in einer Anlage zur Erzeugung und/oder Bereitstellung von Energie.

Grundsätzlich kann vorgesehen sein, dass die Signiereinrichtung sich gegebenenfalls auch über die Vorgabe der Aktionseinrichtung hinwegsetzen kann, also auch einen Antwortdatensatz mit einer Signatur mit geringerer Sicherheitsstufe (als die vorgegebene Mindestsicherheitsstufe) erzeugen kann. Vorzugsweise ist jedoch vorgesehen, dass die Signiereinrichtung den Antwortdatensatz nur dann erzeugen kann, wenn über mindestens einen Teil des Anforderungsdatensatzes eine elektronische Signatur gemäß der Signaturvorgabe erzeugt wurde. Zusätzlich oder alternativ kann vorgesehen sein, dass der Antwortdatensatz der Aktionseinrichtung nur zu Verfügung gestellt wird, wenn über mindestens einen Teil des Anforderungsdatensatzes eine elektronische Signatur der Signiereinrichtung gemäß der Signaturvorgabe erzeugt wurde. Hiermit kann sichergestellt werden, dass unmittelbar erkannt wird, dass der Signaturprozess fehlgeschlagen ist.

In einer weiteren bevorzugten Ausführungsform kann die Aktionseinrichtung ebenfalls als eine Signatureinrichtung ausgestaltet sein, sodass bei der Erstellung eines Anforderungsdatensatzes, dieser durch die Aktionseinrichtung signiert wird. Die Aktionseinrichtung wählt dabei für seine Signatur eine bevorzugte Sicherheitsstufe aus. Insbesondere muss diese nicht der angeforderten Sicherheitsstufe entsprechen. In weiteren bevorzugten Alternativen kann die Sicherheitsstufe der Aktionseinrichtung-Signatur die angeforderte Sicherheitsstufe definieren. Dies kann insbesondere dann gelten, wenn die Aktionseinrichtung keine abweichende Vorgabe hinsichtlich der angeforderten Sicherheitsstufe macht. Hiermit ist eine besonders schnelle und reibungslose Abwicklung möglich.

Im Sinne der Erfindung ist die Signaturstufe bevorzugt eine Sicherheitsstufe, wobei die Sicherheitsstufe bevorzugt die Art der Signatur definiert. Diese ist bevorzugt in die oben genannten drei Kategorien einzuteilen, nämlich "einfache elektronische Signatur", "fortgeschrittene elektronische Signatur" und "qualifizierte elektronische Signatur".

Eine Signaturkette ist bevorzugt als eine Signaturabfolge zu verstehen, in dem ein elektronisches Dokument bzw. ein Datenobjekt oder ein Anforderungsdatensatz zunächst von einer ersten Signiereinrichtung signiert wird und anschließend an eine weitere Signiereinrichtung (oder mehrere weitere Signiereinrichtung) geleitet wird, welche das elektronische Dokument bzw. das Datenobjekt oder den Anforderungsdatensatz ebenfalls signieren und abschließend an die Aktionseinrichtung als Antwortdatensatz übermitteln. Im Endeffekt ist die Anforderung an eine Signaturkette, bevorzugt eine Anforderung an eine mehrfache Signatur durch mehrere Signiereinrichtungen. Es kann bevorzugt sein, dass die Signiereinrichtung nach jeder Signatur einen Antwortdatensatz erzeugt und an die Aktionseinrichtung übermittelt, welche diesen Antwortdatensatz anschließend an eine oder mehrere weitere Signiereinrichtung weiterleitet. Die Signaturkette ermöglicht es, für überaus kritische Informationen mehrere verantwortliche Stellen/Personen gleichzeitig oder kurz hintereinander zu informieren. Darüber hinaus kann die Reaktion auf die kritischen Informationen durch die Signaturkette sicherer ausgestaltet sein, da zum Beispiel für einen Systemstopp zwei oder mehrere Signaturen nötig sind (Signatur einer Signiereinrichtung würde nicht ausreichen).

Der Unterschriftsprozess kann somit also mehrstufig sein, so dass z.B. je nach Schwere des Ereignisses neben dem fachlichen Verantwortlichen auch dessen Vorgesetzter mitunterschreiben muss. Weiterhin können auch unterschiedliche Signaturqualitäten, das sind unterschiedliche definierte Sicherheitslevel der Signaturen, gewählt werden, angefangen bei einer einfachen Information über eine "einfache elektronische Signatur" über eine "fortgeschrittene elektronische Signatur" weiter über eine "qualifizierte elektronische Signatur". Darüber hinaus sind auch Verzweigungen im Unterschriftslauf, Delegationen im Fall von Abwesenheit und auch Gruppenadressierungen möglich, bei denen vorgegeben werden kann, dass eine bestimmte Mindestanzahl an Personen aus einer Gruppe signieren muss.

In einer weiteren bevorzugten Ausführungsform ist das System dadurch gekennzeichnet, dass der Antwortdatensatz einen dritten Datensatz umfasst, der einen Informationswert über eine Handlung aufweist, auf dessen Basis die Aktionseinrichtung den Aktionsdatensatz generiert, wobei der Aktionsdatensatz Steuer- und/oder Regelungsbefehle umfasst. Daraus ergibt sich vorteilhaft, dass auf (besondere) Vorkommnisse in der Anlage zur Erzeugung und/oder Bereitstellung von Energie reagiert werden kann, wobei diese Reaktion von einem Ort eingeleitet wird, welcher von der Anlage entfernt ist. Die Ausgestaltung des Systems ermöglicht es, insbesondere sehr schnell zu reagieren. Weiterhin bietet ein solches System Vorteile in Bezug auf Effizienz und Kosteneffektivität, denn durch eine Anweisung und/oder Wartungen aus einer Ferne kann zum Beispiel auf Fahrtwege durch Personen verzichtet werden. Ferner können auch mehrere Anweisungen gleichzeitig an die Auditoreinrichtung erbracht werden.

Es können dadurch direkte Rückwirkungen auf das loT-System über die Aktionseinrichtung erfolgen, so kann z.B. bei sicherheitsrelevanten Vorkommnissen ein Systemstopp veranlasst werden. Das Aufweisen einer Aktionseinrichtung kann weiterhin zu einer erhöhten Sicherheit des Systems führen. Die Informationen mit Rückwirkungen auf die Anlage zur Erzeugung und/oder Bereitstellung von Energie durch den Aktionsdatensatz bzw. dritten Datensatz wird bevorzugt unter strengen Auflagen durchgeführt. Die Aktionseinrichtung kann dabei als einzelne Systemkomponente besonders gut abgesichert und resistent gegenüber Manipulationen sein.

Bevorzugt weist der dritte Datensatz Daten im Kontext der Steuerung und/oder Regelung der Anlage zur Erzeugung und/oder Bereitstellung von Energie, beispielsweise der einer Anlage umfassten Ventile, auf. Die Auditoreinrichtung ist dabei dazu konfiguriert, die im dritten Datensatz umfassten Steuer- und/oder Regelbefehle umzusetzen und durchzuführen.

In einer weiteren bevorzugten Ausführungsform ist das System dadurch gekennzeichnet, dass der Berichtsgenerator und/oder die Aktionseinrichtung auf einem Server vorliegen. Wie schon geschildert, sind Vorteile damit verbunden, wenn die Aktionseinrichtung und/oder der Berichtsgenerator auf einem Server vorliegt. So können sich zum Beispiel mehrere Systeme einen Berichtsgenerator und/oder eine Aktionseinrichtung teilen. Der Berichtsgenerator und/oder die Aktionseinrichtung können aus der Ferne gewartet und eingestellt werden. Weiterhin führt eine solche Anordnung des Berichtsgenerators und/oder der Aktionseinrichtung auf einem Server dazu, dass in der Anlage zur Erzeugung und/oder Bereitstellung von Energie selbst, der Berichtsgenerator und/oder die Aktionseinrichtung nicht umfasst sein muss, sodass dies wiederum keinen Platz in der Anlage einnimmt.

In einer weiteren bevorzugten Ausführungsform ist das System dadurch gekennzeichnet, dass die Übermittlung des Anforderungsdatensatzes, des Antwortdatensatzes, des Aktionsdatensatzes, des Datenobjektes als ein Datenübertragungsprozess über eine IP-basierte Kommunikation erfolgt, wobei mindestens ein Datenübertragungsprozess durch ein Sicherheitsmodul kryptographisch abgesichert durchgeführt wird.

Die IP-basierte Kommunikation erfolgt bevorzugt durch Internetprotokolle, also Protokolle der Netzwerkkommunikation. Die Übertragung von Daten über Protokolle der Netzwerkkommunikation ermöglicht vorteilhaft eine Übertragung von großen Datenmengen, sodass unter Umständen dadurch sogar auch die Liveübertragung von Video und detaillierte Fotofolgen ermöglicht werden. Weiterhin ermöglicht eine derartige Übertragung eine Steuerung aus der Ferne von Komponenten wie Kamera und/oder Mikrofon. Vorliegend sind die Protokolle ausgesucht aus der Gruppe umfassend, https, http POST, SIP, SFTP, FTP, SMTP.

In einer bevorzugten Ausführungsform wird das "http POST" - Protokoll als Übertragungsprotokoll verwendet. In diesem Zusammenhang werden der erste Datensatz und/oder der zweite Datensatz und/oder der dritte Datensatz und/oder der Anforderungsdatensatz und/oder der Antwortdatensatz und/oder der Aktionsdatensatz als sogenannter Playload (Nutzlast) mittels "http POST" übermittelt. Der Vorteil von "http POST" ist, dass die Entitäten nicht damit belastet werden, eine Verbindung über eine längere Zeit halten zu müssen. Weiterhin ist "http POST" in simpler Weise ohne große Anforderungen in das erfindungsgemäße System zu implementieren und insbesondere überaus benutzerfreundlich.

In einer weiteren bevorzugten Ausführungsform wird das "SFTP" - Protokoll als Übertragungsprotokoll verwendet. Ein wesentlicher Vorteil von "SFTP" ist der, dass die Kommunikation verschlüsselt erfolgt. Somit können Angreifer den Datenverkehr nicht ohne Weiteres einsehen. Die Verschlüsselung wird nicht von "SFTP" selbst, sondern dem darunterliegenden Kommunikationskanal bereitgestellt, weshalb verschiedene Methoden genutzt werden können. Neben dem Kopieren von Dateien in beide Richtungen - von einem Client auf einen Server und umgekehrt - können per "SFTP" auch Verzeichnisse ausgelesen und aufgelistet sowie Dateien auf dem Server vom Client ausgelöscht werden.

In einer weiteren bevorzugten Ausführungsform ist bei der Übertragung von Daten mittels eines "SFTP"-Protokolls bevorzugt zwischen den einzelnen Systemkomponenten, also der Auditoreinrichtung, der Aktionseinrichtung und/oder dem Berichtsgenerator vorzugsweise ein SFTP-Server zwischengeschaltet. In dieser bevorzugten Variante werden zwischen einer ersten Systemkomponente und dem SFTP-Server SFTP-Files ausgetauscht, wobei der SFTP-Server diese Files dann wandelt und der zweiten Systemkomponente über ein "http POST"-Protokoll zur Verfügung stellt.

Überdies ist das vorgeschlagene System durch den bevorzugten Einsatz eines Sicherheitsmoduls, welches alle Datenübertragungsprozesse kryptografisch abgesichert durchführt, vorteilhaft besonders sicher gegenüber Datenmanipulation, Datendiebstahl und/oder Datenverlust. Bevorzugt ist das Sicherheitsmodul als ein HSM ausgestaltet. Es ist im Sinne der Erfindung bevorzugt, dass das HSM ein hardwarebasiertes, kryptografisches Modul darstellt, das vorzugsweise eine FIPS-140-2-Zertifizierung aufweist. Durch die Vorsehung der mit FIPS-Zertifizierung arbeitenden Auditoreinrichtung, Berichtsgenerator, Aktionseinrichtung und/oder Signiereinrichtung wird insbesondere ein technisches Problem mit technischen Mitteln gelöst, nämlich die Bereitstellung einer besonders sicheren Datenübertragung innerhalb des Systems. Das HSM kann von einem Einzelchipmodul, einem autonomen Multichipmodul oder einem eingebetteten Multichipmodul gebildet werden oder ein solches umfassen. Das HSM ist vorzugsweise dazu eingerichtet, Daten besonders sicher zu speichern. Insbesondere ist ein HSM dazu in der Lage, kritische Sicherheitsparameter, wie Passwörter, vertrauliche Daten oder Schlüssel zur Verschlüsselung von Daten zu generieren, zu speichern, zu nutzen und/oder zu pflegen. Die Schlüssel können beispielsweise symmetrisch oder asymmetrisch sein. Vorteilhafterweise können HSM als kryptografische Coprozessoren eingesetzt werden. In bevorzugten Ausführungsformen kann ein HSM eine batteriebetriebene Schaltung und/oder eine Spannungsüberwachung aufweisen. Dadurch wird insbesondere die Integration oder Vorsehung einer Echtzeituhr zur korrekten Zeiterfassung und Zeitstempelung ermöglicht, wodurch beispielsweise gewährleistet werden kann, dass abgelaufene Schlüssel nicht länger genutzt werden können. Darüber hinaus kann ein HSM einen redundanten Speicher umfassen, der beispielsweise dafür genutzt werden kann, mehrere Technologien zur Erzeugung einer zusätzlichen Datensicherheit gleichzeitig zu verwenden. Insbesondere kann mit Hilfe des HSM eine Public-Key-Infrastruktur auf höchstem Niveau realisiert werden, wie sie dem Fachmann bekannt ist.

Dadurch, dass die Systemkomponenten bevorzugt mit einem Sicherheitsmodul ausgestattet sind, können alle Datenübertragungsprozesse kryptografisch abgesichert durchgeführt werden. Besonders vorteilhaft wird das System dadurch widerstandsfähig gegen Manipulation und unbefugtes Lesen der Daten.

Es ist im Sinne der Erfindung, dass ein HSM eine Kette von Zertifikaten umfasst, die vorzugsweise vor Inbetriebnahme des HSM auf die Vorrichtung geladen werden. Das HSM ist darüber hinaus dazu eingerichtet, eigene private und öffentliche Geräteschlüssel zu erzeugen. Vorzugsweise verlässt der private Schlüssel zu keinem Zeitpunkt das HSM, während der öffentliche Schlüssel nach außen abgegeben werden kann, zum Beispiel an einen dezentralen Server zur dortigen Signierung. Im Gegenzug kann das HSM ein personalisiertes, signiertes Gerätezertifikat erhalten, mit dem das HSM die Sicherheit in einem Internet of Things-System (IOT) deutlich erhöhen kann. Das HSM kann dann vom dezentralen Server als "echte" Sicherheitseinrichtung erkannt und authentifiziert werden, was insbesondere durch die Vergabe einer eindeutigen Kennung ermöglicht wird. Auf diese Weise lassen sich besonders unkompliziert authentifizierte TLS-Verbindungen herstellen (Transport Layer Security).

Die erfindungsgemäße Anlage ist vorzugsweise über ein Gateway mittels eines Token oder einer ID (basierend auf einer Private Key Infrastruktur PKI eines Data Management Center DMC) durch einen Betreiber an eine Auditoreinrichtung gebunden, welche Prozessdaten an ein Expertensystem bestehend aus einem Berichtsgenerator und unterschiedlichen zugehörigen Auswertungsanwendungen liefert, welches automatisiert Fehlerbehebungsaktionen vorschlägt, die durch die Aktionseinrichtung nach vorheriger Freigabe durch das gekoppelte rechtssichere digitale Unterschriftsverfahren (Signiereinrichtungen) dokumentierte Rückwirkungen auf die Anlage ermöglichen

In einer weiteren bevorzugten Ausführungsform ist das System dadurch gekennzeichnet, dass der erste und/oder zweite und/oder dritte Datensatz Daten aufweist ausgesucht aus der Gruppe umfassend Standortdaten, personenbezogene Daten, zeitbezogene Daten, Audiodaten, Bilddaten, Analysedaten, Prozessdaten, Verwendungsdaten, Textdaten und/oder Videodaten,
- wobei der Informationswert über das Auslösungsereignis in dem ersten Datensatz eine qualitätsbezogene und/oder quantitätsbezogene Information über das Auslösungsereignis umfasst.

Die aufgelisteten Daten können weitreichende Informationen über die Anlage zur Erzeugung und/oder Bereitstellung von Energie umfassen, sodass daraus weitere Informationen, wie ein Auslösungsereignis, ein Muster, ein Eintrittsereignis, ein Vorhersageereignis und/oder eine Handlungsoption, abgeleitet werden können. Neben der Erkennung eines Auslösungsereignisses sind die Daten auch zur Überwachung von Prozessen als solche geeignet.

Eine qualitätsbezogene Information über ein Auslösungsereignis umfasst bevorzugt eine Information über die Art, die Schwere, die Tragweite und/oder die Relevanz über ein eingetretenes Ereignis.

Eine quantitätsbezogene Information hingegen umfasst bevorzugt eine Information über eine Anzahl von Ereignissen und/oder Kosten. Entsprechend weist eine quantitätsbezogene Information über ein Auslösungsereignis eine Information über mengenmäßige und oder zahlenmäßige Merkmale auf.

In einer weiteren bevorzugten Ausführungsform ist das System dadurch gekennzeichnet, dass die Auditoreinrichtung dazu eingerichtet ist, unter Bezugnahme des Aktionsdatensatzes eine Steuerung und/oder Regelung einer Sensorik und/oder Aktuatorik zu initiieren, wobei die Sensorik und Aktuatorik ausgesucht ist aus der Gruppe umfassend: Strom-, Wasser- und Energiemengenzähler, Temperatur- und Druckmessumformer, Ventil, Pumpe, elektrische Schaltanlage, Zugangssteuerung.

Es versteht sich, dass die Aktuatorik ein Teilgebiet der Antriebstechnik ist, das sich mit einem Aktor als einem technischen Element beschäftigt. Der Begriff der Aktorik umfasst allgemein das Erzeugen einer Bewegung oder einer Verformung und ist daher für verschiedene technische Disziplinen von Bedeutung, beispielsweise in der Regelungstechnik, der Automatisierungstechnik oder der Mechatronik. Aktoren wandeln bevorzugt Signale (z. B. von der Auditoreinrichtung ausgehende Befehle) in mechanische Bewegung oder andere physikalische Größen (z. B. Druck oder Temperatur) und greifen damit aktiv in einen Prozess ein.

In einer weiteren bevorzugten Ausführungsform ist das System dadurch gekennzeichnet, dass anlagenbezogene Prozessgrößen ausgesucht sind aus der Gruppe umfassend Strom-, Wasseroder Wärmeverbrauch, Zugangsüberwachung, Betriebsparameter wie Anlagenschmierung, - verschleiß, -temperatur, -verunreinigung.

In einer weiteren bevorzugten Ausführungsform ist das System dadurch gekennzeichnet, dass die Analyse der aufgenommenen Prozessgrößen und/oder die Ermittlung des Auslösungsereignisses und/oder des Musters und/oder des Eintrittsereignisses und/oder des Vorhersageereignisses und/oder der Handlungsoption über Algorithmen der künstlichen Intelligenz erfolgt. Die Nutzung von künstlicher Intelligenz (kurz: KI) zur Analyse von Daten führt zu bedeutenden Vorteilen gegenüber einer Analyse durch herkömmliche (computerimplementierte) Verfahren und/oder auch gegenüber einer manuellen Analyse durch einen menschlichen Beobachter. So kann eine KI vorteilhaft überaus große Datenmengen in einer sehr kurzen Zeit automatisiert analysieren. Ferner können die Algorithmen der künstlichen Intelligenz Muster und/oder Merkmale in einer Datenmenge erkennen, die von einem Menschen oder herkömmlichen Algorithmen nicht erkannt werden. Dies führt insbesondere dazu, dass die KI eintretende Auslösungsereignisse frühzeitig (zeitlich weit vor dem eigentlichen Auftreten des Auslösungsereignisses) erkennen kann.

In einer weiteren bevorzugten Ausführungsform umfassen die Algorithmen der künstlichen Intelligenz bevorzugt Machine Learning Algorithmen. Es versteht sich, dass Machine Learning Algorithmen ein Teilbereich der künstlichen Intelligenz (*Artificial Intelligence*) sind. Machine Learning nutzt dabei mathematische und statistische Modelle, um aus Datenbeständen zu "lernen". Im Allgemeinen haben Machine Learning Algorithmen den Vorteil, dass Informationen, die für einen menschlichen Beobachter zu komplex sind, automatisch aus einem großen Datensatz extrahiert werden können. Es gibt eine Vielzahl von Machine Learning Algorithmen, die sich im Wesentlichen in drei unterschiedliche Lernverfahren unterscheiden lassen: Supervised Learning, Unsupervised Learning und Reinforcement Learning.

Besonders bevorzugt werden erfindungsgemäß Verfahren des Supervised Learning für die Analyse der aufgenommenen anlagenbezogenen Prozessgrößen genutzt. Beim Supervised Learning Verfahren wird zunächst ein sogenannter Trainingsprozess durchgeführt. Hierbei werden Trainingsdaten in Form von Eingabedaten zusammen mit den entsprechenden Zieldaten bereitgestellt. Der Zweck eines Trainings ist allgemein in Machine Learning Verfahren, Parameter einer Funktion so anzupassen, dass die Funktion anschließend in der Lage ist, den Zielwert mit hoher Genauigkeit von dem entsprechenden Eingabewert zu bestimmen. Die angepasste Funktion wird dann nach dem Trainingsprozess zur Vorhersage von Zieldaten für zuvor nicht sichtbare Eingabedaten verwendet. Die Funktion wird dabei durch ein mathematisches und/oder statistisches Modell beschrieben.

In einer bevorzugten Ausführungsform wird hierbei die Funktion durch Support Vektor Machine, Bayes Netze und/oder Entscheidungsbäume ausgestaltet. Besonders bevorzugt wird die Funktion durch ein künstliches neuronales Netz beschrieben. Hierbei können die künstlichen neuronalen Netze erfindungsgemäß verschiedene Architekturen aufweisen und bspw. als Deep Feed Forward (DFF) Network, Recurrent Neural Network (RNN), Deep Convolutional Network (DCN), Deconvolutinal Network (DN), Convolutional Neural Network (CNN), Deep Residual Network (DRN), Boltzmann-Maschine, Time Delay Neural Networks (TDNNs) ausgebildet sein.

Im Sinne der Erfindung sind die Eingabedaten bevorzugt durch die anlagenbezogenen Prozessgrößen definiert, nämlich bevorzugt Strom-, Wasser- oder Wärmeverbrauch, Zugangsüberwachung, Betriebsparameter wie Anlagenschmierung, -verschleiß, -temperatur, - verunreinigung (ohne auf diese beschränkt zu sein).

Erfindungsgemäß sind Zieldaten bevorzugt durch die Einordnung der Eingabedaten in eine bestimmte Klasse definiert und/oder es wird aufgrund der Eingabedaten das Auftreten von spezifischen Zieldaten (Ereignissen) bestimmt. Ebenso können auch Wahrscheinlichkeiten für die Zugehörigkeit in eine bestimmte Klasse als Zieldaten oder Wahrscheinlichkeiten für ein Auftreten von spezifischen Zieldaten (Ereignissen) ausgegeben werden. Bevorzugt sind die Klassen in bestimmte Auslösungsereignisse unterteilt. Zum Beispiel: "Ausfall eines Kühlaggregats"; "Brand der Anlage"; "Überlastung des Generators"; "Keine Lagerkapazitäten"; "unbefugte Personen haben sich Zutritt zum Lager beschaffen". Die KI kann demnach als sogenannter Klassifikationsalgorithmus anhand der Zuordnung der Eingabedaten in entsprechende Zieldaten ausgeben, ob ein bestimmtes Auslösungsereignis, Vorhersageereignis oder Eintrittsereignis eintrifft.

Ebenso bevorzugt kann für einen Machine Learning Algorithmus als Input (Eingabedaten) das in einem vorherigen Schritt ermittelte Auslösungsereignis, Vorhersageereignis oder Eintrittsereignis verwendet werden. Entsprechend kann der Machine Learning Algorithmus als Output (Zieldaten) eine für das Auslösungsereignis zuständige Signiereinrichtung ermitteln oder aber eine Handlungsoption bereitstellen.

In einer weiteren bevorzugten Ausführungsform wird das Verfahren des Unsupervised Learning für die Analyse oder Verarbeitung der anlagenbezogenen Prozessgrößen genutzt. Beim Unsupervised Learning versucht der Algorithmus in den Eingabedaten Muster zu erkennen, die von einem strukturlosen Rauschen abweichen. Die Funktion im Trainingsprozess orientiert sich dabei nur an den Ähnlichkeiten der Eingabedaten und passt ihre Parameter dementsprechend an, sodass keine Ausgabedaten für den Trainingsprozess verwendet werden.

In einer bevorzugten Ausführungsform werden anhand des Unsupervised Learning Verfahrens Segmentierungen bzw. Clustering der Eingabedaten oder aber auch bevorzugt Komprimierungen der Eingabedaten durchgeführt. Dem Fachmann sind die Begriffe Clustering, Segmentierung und Komprimierung im Zusammenhang mit Machine Learning Verfahren bekannt.

In einer bevorzugten Ausführungsform umfasst der Unsupervised Learning Algorithmus bevorzugt die Hauptkomponentenanalyse (Principal Component Analysis (PCA)) und/oder den K-Means-Algorithmus und/oder mindestens ein neuronales Netz.

Das vorgeschlagene System weist weiterhin bevorzugt Algorithmen der künstlichen Intelligenz mit Unsupervised Learning Verfahren auf. In diesem Zusammenhang kann eine Datenmenge von aufgenommenen anlagenbezogenen Prozessgrößen über Verfahren des Unsupervised Learning vorbearbeitet werden, indem zum Beispiel relevante Daten gruppiert (geclustert) werden, um anschließend ausgehend von diesen "gefilterten" Daten einen Klassifikationsalgorithmus zur Ermittlung eines Auslösungsereignisses und/oder einer Signiereinrichtung zu erhalten.

Wie schon beschrieben werden in beiden oben benannten Verfahren in einem ersten Schritt sogenannte Trainingsprozesse zum Ermitteln von optimalen Parametern einer o.g. Machine Learning Funktion durchgeführt. Anhand der angepassten Funktion werden nach dem Training verschiedene Aussagen für vorher unbekannte Eingabedaten getätigt.

In einer weiteren bevorzugten Variante wird das Verfahren des Reinforcement Learning für die Analyse oder Verarbeitung der aufgenommenen Prozessgrößen genutzt. Beim Reinforcement Learning (Lernen durch Verstärkung) Verfahren findet hingegen der Trainingsprozess kontinuierlich auch nach Anpassung der Parameter einer Funktion statt. Über "Trial and Error" werden Auswirkungen verschiedener Aussagen anhand der angepassten Funktion für bisher unbekannte Eingabedaten beobachtet und bewertet. Als Reaktion auf diese Aussagen erhält der Algorithmus ein Feedback, abstrakt dargestellt in Form einer Belohnung oder Bestrafung. Woraufhin der Algorithmus die Funktion anhand ihrer Parameter weiter optimiert. Dementsprechend passt der Algorithmus die Funktion des Machine Learning Verfahrens kontinuierlich an bzw. verändert diesen.

In einer bevorzugten Ausführungsform umfasst das Verfahren des Reinforcement Learning die Q-Learning Methode und/oder o.g. neuronale Netze und/oder weitere neuronale Netze sowie weitere für den Fachmann bekannte Algorithmen.

In einer weiteren bevorzugten Ausführungsform betrifft die Erfindung ein Verfahren zur rechtssicheren, intelligenten Steuerung von Prozessen in einer Anlage zur Erzeugung und/oder Bereitstellung von Energie umfassend die nachfolgenden Schritte:
a. Automatisierte Aufnahme anlagenbezogener Prozessgrößen durch eine Erfassungseinrichtung;
b. Erkennung eines Auslösungsereignisses und Erzeugung eines ersten Datensatzes durch eine Auditoreinrichtung, wobei der erste Datensatz mindestens eine der aufgenommenen Prozessgrößen und/oder einen Informationswert über das Auslösungsereignis umfasst und als ein Datenobjekt an die Aktionseinrichtung übermittelt wird;
c. Ermittlung einer für das Datenobjekt zuständigen ersten und/oder zweiten Signiereinrichtung;
d. Übermittelung eines ersten und/oder zweiten Anforderungsdatensatzes an die dem Datenobjekt zugeordnete erste und/oder zweite Signiereinrichtung durch die Aktionseinrichtung, wobei der erste und/oder zweite Anforderungsdatensatz eine Signaturanforderung und mindestens einen Teil des Datenobjektes umfasst;
e. Erzeugung eines ersten und/oder zweiten Antwortdatensatzes durch die erste und/oder zweite Signiereinrichtung, wobei der erste und/oder zweite Antwortdatensatz eine elektronische Signatur über mindestens einen Teil des ersten und/oder zweiten Anforderungsdatensatzes umfasst;
f. Übermittelung des ersten und/oder zweiten Antwortdatensatzes an die Aktionseinrichtung und/oder an eine weitere Signiereinrichtung;
g. Übermittlung eines Aktionsdatensatzes an die Auditoreinrichtung durch die Aktionseinrichtung, wobei der Aktionsdatensatz Steuer- und/oder Regelungsbefehle umfasst.

Die Kombination der vorliegenden Verfahrensschritte führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinanderstehen. Ein wichtiger Vorteil des erfindungsgemäßen Verfahrens ist die Erforderlichkeit von äußerst wenigen Verfahrensschritten und Systemkomponenten, wobei trotzdem eine überaus sichere Infrastruktur zur rechtssicheren, intelligenten Steuerung von Prozessen in einer Anlage zur Erzeugung und/oder Bereitstellung von Energie generiert wird.

Ein Fachmann erkennt, dass die im Zusammenhang mit dem erfindungsgemäßen System erörterten Vorteile, technischen Effekte und bevorzugten Ausführungsformen analog für das erfindungsgemäße Verfahren zur rechtssicheren, intelligenten Steuerung von Prozessen in einer Anlage zur Erzeugung und/oder Bereitstellung von Energie, gelten, welches sich das erfindungsgemäße System zu Nutze macht. Ebenfalls sind alle Vorteile, technischen Effekte und bevorzugten Ausführungsformen, welche im Kontext des Verfahrens beschrieben werden, auf das System übertragbar.

In einer weiteren bevorzugten Ausführungsform ist das Verfahren dadurch gekennzeichnet, dass die folgenden Schritte zwischen den Verfahrensschritten b und c stehen:
b1. Übermittelung des ersten Datensatzes an einen Berichtsgenerator;
b2. Erkennung eines Musters, eines Eintrittsereignisses, eines Vorhersageereignisses und/oder einer Handlungsoption aufgrund einer Analyse der aufgenommenen Prozessgrößen und/oder des Informationswertes über das Auslösungsereignis;
b3. Ergänzung des ersten Datensatzes und/oder Erstellen eines zweiten Datensatzes mit einem Informationswert über das Muster, das Eintrittsereignis, das Vorhersageereignisses und/oder der Handlungsoption
b4. Übermittelung des ersten und/oder zweiten Datensatzes als ein Datenobjekt an die Aktionseinrichtung.

In einer weiteren bevorzugten Ausführungsform ist das Verfahren dadurch gekennzeichnet, dass die eine weitere Signiereinrichtung einen weiteren Antwortdatensatz mit einer weiteren elektronischen Signatur erzeugt und an die Aktionseinrichtung übermittelt. Dies ermöglicht vorteilhaft die Anwendung einer Signaturkette, die eine erhöhte Sicherheit an eine Signatur gewährleistet, denn in bestimmten Fällen kann ein Prozess in der Anlage zur Erzeugung und/oder Bereitstellung von Energie beispielsweise nur fortgeführt oder abgebrochen werden, wenn mehrere Signiereinrichtungen die Informationen über ein Auslösungsereignis erhalten und signiert haben.

In einer weiteren bevorzugten Ausführungsform ist das Verfahren dadurch gekennzeichnet, dass die Auditoreinrichtung unter Bezugnahme des Aktionsdatensatzes eine Steuerung und/oder Regelung einer Sensorik und/oder Aktuatorik initiiert.

In einer weiteren bevorzugten Ausführungsform ist das Verfahren dadurch gekennzeichnet, dass die Aktionseinrichtung bei einer fehlenden Übermittlung des Antwortdatensatzes nach einem festgelegten Zeitintervall, dem Datenobjekt eine weitere Signiereinrichtung zuordnet. Dies stellt vorteilhaft sicher, dass die Information über ein Auslösungsereignis, Vorhersageereignis, Eintrittsereignis, Handlungsoption und/oder die Prozessgrößen als solche eine Signiereinrichtung erreichen, obwohl eine erste zuständige Signiereinrichtung unter Umständen verhindert (bspw. durch Stromausfall) ist.

In einer weiteren bevorzugten Ausführungsform ist das Verfahren dadurch gekennzeichnet, dass die Analyse der aufgenommenen Prozessgrößen und/oder die Ermittlung des Auslösungsereignisses und/oder des Musters und/oder des Eintrittsereignisses und/oder des Vorhersageereignisses und/oder der Handlungsoption über Algorithmen der künstlichen Intelligenz erfolgt. Die Verwendung von künstlicher Intelligenz im erfindungsgemäßen Verfahren führt zu einer Optimierung von Prozessen und einem Wegfall repetitiver Aufgaben, sodass die Effizienz durch gezielteren und damit nachhaltigeren Einsatz von Ressourcen, Zeiteinsparung und Minimierung der Verschwendung gesteigert werden kann.

### FIGUREN

Im Folgenden soll die Erfindung anhand von Figuren näher erläutert werden, ohne auf diese beschränkt zu sein.

### Kurzbeschreibung der Abbildungen

- **Fig. 1**: Schematische Darstellung einer bevorzugten Anordnung des erfindungsgemäßen Systems
- **Fig. 2**: Schematisch dargestellter Ablauf einer bevorzugten Ausführungsform des erfindungsgemäßen Verfahrens

### Detaillierte Beschreibung der Abbildungen

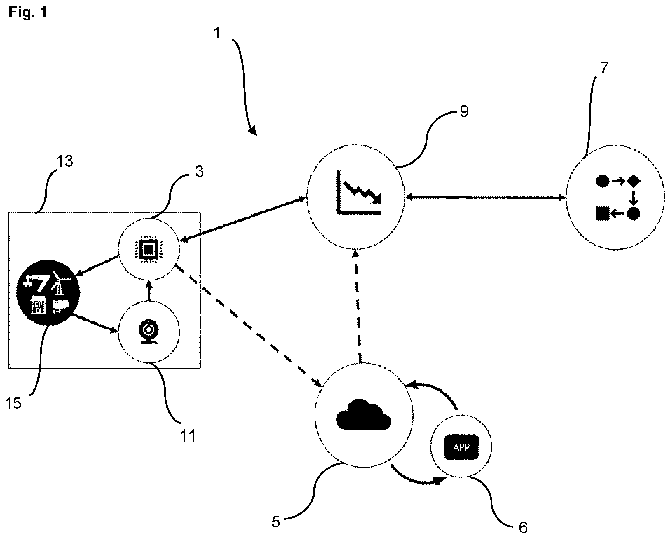

**Fig. 1** illustriert eine bevorzugte Anordnung von Systemkomponenten für ein System **1** zur rechtssicheren, intelligenten Steuerung von Prozessen in einer Anlage **13** zur Erzeugung und/oder Bereitstellung von Energie. Das System **1** umfasst bevorzugt eine Erfassungseinrichtung **11,** eine Auditoreinrichtung **3,** eine Aktionseinrichtung **9,** eine Signiereinrichtung **7** und optional einen Berichtsgenerator **5.** Die Signiereinrichtung **7** ist bevorzugt anlagenbezogenen Prozessen zugeordnet **15** und dazu eingerichtet, anlagenbezogene Prozessgrößen automatisiert aufzunehmen. Diese werden bevorzugt an die Auditoreinrichtung **3** übermittelt, welche die aufgenommenen Prozessgrößen analysiert und ein Auslösungsereignis erkennt. Weiterhin ist die Auditoreinrichtung **3** in der Lage, einen ersten Datensatz zu generieren, welcher mindestens eine der aufgenommenen Prozessgrößen und/oder einen Informationswert über das Auslösungsereignis umfasst.

Der Datensatz kann anschließend bevorzugt als Datenobjekt an die Aktionseinrichtung **9** übertragen werden. Die Aktionseinrichtung **9** ist bevorzugt dazu eingerichtet, eine für das Datenobjekt zuständige Signiereinrichtung **7** zu ermitteln. Hierbei weist die Aktionseinrichtung **9** bevorzugt eine Datenbank mit den Adressierungsinformationen aller Signiereinrichtungen **7** auf. Nach einer Zuordnung wird bevorzugt ein Anforderungsdatensatz durch die Aktionseinrichtung **9** erstellt, welcher eine Anforderung über eine Signaturstufe und eine Signaturkette aufweist. Dieser Anforderungsdatensatz wird bevorzugt an die zuständige Signiereinrichtung **7** übertragen. Die Signiereinrichtung **7** erzeugt bevorzugt einen Antwortdatensatz, welcher eine elektronische Signatur über mindestens einen Teil des Anforderungsdatensatzes umfasst. Darüber hinaus kann der Antwortdatensatz an die Aktionseinrichtung **9** und/oder an eine weitere Signiereinrichtung **7** übermittelt werden. Abschließend kann ein Aktionsdatensatz durch die Aktionseinrichtung **9** erzeugt und der Auditoreinrichtung **3** bereitgestellt werden.

Die Auditoreinrichtung **3** ist zudem dazu eingerichtet, den ersten Datensatz dem Berichtsgenerator **5** bereitzustellen. Sofern der Berichtsgenerator **5** den ersten Datensatz erhält, analysiert dieser bevorzugt die aufgenommenen Prozessgrößen und/oder den Informationswert über das Auslösungsereignis. Im Zuge dessen weist der Berichtsgenerator **5** Auswertungsanwendungen **6** auf. Die Auswertungsanwendungen **6** sind bevorzugt als computerimplementierte Algorithmen zu verstehen, die vorzugsweise auf künstlicher Intelligenz basieren. So kann bevorzugt ein Muster, ein Eintrittsereignis, ein Vorhersageereignis und/oder eine Handlungsoption durch die Auswertungsanwendungen **6** bzw. den Berichtsgenerator **5** erkannt werden. Der erste Datensatz wird dabei entweder mit einem Informationswert über ein Muster, ein Eintrittsereignis, ein Vorhersageereignis und/oder eine Handlungsoption ergänzt oder aber es wird ein zweiter Datensatz erstellt, der einen vorgenannten Informationswert umfasst. Anschließend wird der erste und/oder zweite Datensatz der Aktionseinrichtung **9** als Datenobjekt zugestellt.

Unter Einfluss des vom Berichtsgenerator **5** erkannten Musters, Eintrittsereignisses, Vorhersageereignisses und/oder Handlungsoption kann die Aktionseinrichtung **9** bevorzugt eine relevante Signiereinrichtung **7** ermitteln und/oder automatisiert einen entsprechenden Aktionsdatensatz erzeugen. Der Aktionsdatensatz umfasst dabei bevorzugt Steuer- und/oder Regelungsbefehle und wird bevorzugt an die Auditoreinrichtung **3** übermittelt.

Die Auditoreinrichtung **3** ist ferner dazu eingerichtet, unter Bezugnahme des Aktionsdatensatzes eine Steuerung und/oder Regelung einer Sensorik und/oder Aktuatorik in der Anlage **13** zur Erzeugung und/oder Bereitstellung von Energie zu initiieren, sodass anlagenbezogene Prozesse als Reaktion auf das Auslösungsereignisses gesteuert und/oder geregelt werden.

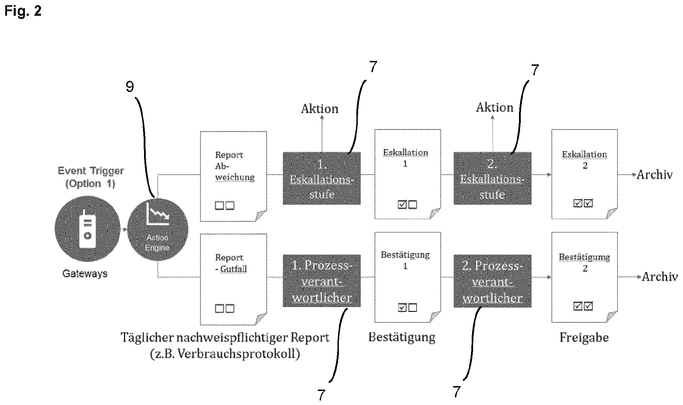

**Fig. 2** zeigt eine bevorzugte Ausführungsform des erfindungsgemäßen Verfahrens in einer schematischen Ablaufdarstellung. Bevorzugt bekommt die Aktionseinrichtung **9** dabei - wie schon in **Fig. 1** erläutert - eine Information über ein Auslösungsereignis anhand eines Datenobjektes von einer Auditoreinrichtung **3** (nicht in **Fig. 2** dargestellt) und/oder einen Informationswert über ein Muster, ein Eintrittsereignis, ein Vorhersageereignis und/oder eine Handlungsoption vom Berichtsgenerator **5** (nicht in **Fig. 2** dargestellt) übermittelt. Die Aktionseinrichtung **9** ermittelt anschließend bevorzugt eine zuständige Signiereinrichtung **7** (hier: 1. Prozessverantwortlicher oder 1. Eskalationsstufe) und ordnet ihr das Datenobjekt zu. Weiterhin erstellt die Aktionseinrichtung **9** einen Anforderungsdatensatz mit einer Anforderung an eine Signaturstufe und Signaturkette und übermittelt diesen Anforderungsdatensatz an die dem Datenobjekt zugeordnete Signiereinrichtung **7.** Im vorliegenden Fall fordert die Signaturkette, die Signatur von zwei Signiereinrichtung **7** an. Die Signiereinrichtung **7** erstellt bevorzugt nach Erhalt des Anforderungsdatensatzes einen Antwortdatensatz, wobei der Antwortdatensatz eine elektronische Signatur über mindestens einen Teil des Anforderungsdatensatzes umfasst. Abschließend übermittelt die Signiereinrichtung **7** den Antwortdatensatz an eine weitere Signiereinrichtung **7** (hier: 2. Prozessverantwortlicher oder 2. Eskalationsstufe). Die weitere Signiereinrichtung **7** erstellt ebenfalls einen Antwortdatensatz mit einer elektronischen Signatur über mindestens einen Teil des Anforderungsdatensatzes.

### BEZUGSZEICHENLISTE

- **1**: System
- **3**: Auditoreinrichtung
- **5**: Berichtsgenerator
- **6**: Auswertungsanwendungen
- **7**: Signiereinrichtung
- **9**: Aktionseinrichtung
- **11**: Erfassungseinrichtung
- **13**: Anlage zur Erzeugung und/oder Bereitstellung von Energie
- **15**: Anlagenbezogene Prozesse

## Patentansprüche

1. System (1) zur rechtssicheren, intelligenten Steuerung von Prozessen in einer Anlage (13) zur Erzeugung und/oder Bereitstellung von Energie, wobei das System (1) mindestens eine Erfassungseinrichtung (11), eine Auditoreinrichtung (3), eine Aktionseinrichtung (9) und eine Signiereinrichtung (7) umfasst,
**dadurch gekennzeichnet, dass**
a) die Erfassungseinrichtung (11) dazu eingerichtet ist, anlagenbezogene Prozessgrößen automatisiert aufzunehmen;
b) die Auditoreinrichtung (3) dazu eingerichtet ist,
(i) die aufgenommenen Prozessgrößen zu analysieren und ein Auslösungsereignis zu erkennen;
(ii) einen ersten Datensatz zu generieren, wobei der erste Datensatz mindestens eine der aufgenommenen Prozessgrößen und/oder einen Informationswert über das Auslösungsereignis umfasst;
(iii) den ersten Datensatz als Datenobjekt an die Aktionseinrichtung (9) zu übermitteln;
c) die Aktionseinrichtung (9) dazu eingerichtet ist,
(i) eine für das Datenobjekt zuständige Signiereinrichtung (7) zu ermitteln;
(ii) einen Anforderungsdatensatz an die dem Datenobjekt zugeordnete Signiereinrichtung (7) zu übermitteln, wobei der Anforderungsdatensatz eine Signaturanforderung und mindestens einen Teil des Datenobjektes umfasst;
(iii) einen Aktionsdatensatz zu erzeugen und der Auditoreinrichtung (3) bereitzustellen;
d) die Signiereinrichtung (7) dazu eingerichtet ist,
(i) einen Antwortdatensatz zu erzeugen, der eine elektronische Signatur über mindestens einen Teil des Anforderungsdatensatzes umfasst;
(ii) den Antwortdatensatz an die Aktionseinrichtung (9) und/oder an eine weitere Signiereinrichtung (7) zu übermitteln.

2. System (1) nach Anspruch 1
**dadurch gekennzeichnet, dass**
das System (1) einen Berichtsgenerator (5) umfasst,
- wobei der Berichtsgenerator (5) Auswertungsanwendungen (6) umfasst und dazu eingerichtet ist,
(i) die aufgenommenen Prozessgrößen und/oder den Informationswert über das Auslösungsereignis zu analysieren;
(ii) ein Muster, ein Eintrittsereignis, ein Vorhersageereignis und/oder eine Handlungsoption zu erkennen;
(iii) den ersten Datensatz mit einem Informationswert über ein Muster, ein Eintrittsereignis, ein Vorhersageereignis und/oder eine Handlungsoption zu ergänzen und/oder einen zweiten Datensatz mit einem Informationswert über ein Muster, ein Eintrittsereignis, ein Vorhersageereignis und/oder eine Handlungsoption zu erstellen und den ersten und/oder zweiten Datensatz der Aktionseinrichtung (9) als Datenobjekt bereitzustellen,
wobei bevorzugt die Aktionseinrichtung (9) dazu eingerichtet ist,
- den Antwortdatensatz an den Berichtsgenerator (5) zu übermitteln, welcher den Antwortdatensatz archivieren kann.

3. System (1) nach einem oder mehreren der vorhergehenden Ansprüche
**dadurch gekennzeichnet, dass**
die Aktionseinrichtung (9) dazu eingerichtet ist,
- bei einer fehlenden Rückmeldung durch einen Antwortdatensatz, nach einem definierten Zeitintervall dem Datenobjekt eine weitere Signiereinrichtung (7) zuzuordnen.

4. System (1) nach einem oder mehreren der vorhergehenden Ansprüche
**dadurch gekennzeichnet, dass**
die Signaturanforderung abhängig vom Auslösungsereignis, Muster, Eintrittsereignis, Vorhersageereignis und/oder der Handlungsoption ist und/oder eine Anforderung ist in Bezug auf:
a) eine Signaturstufe, die eine Sicherheitsstufe umfasst und/oder;
b) eine Signaturkette, die eine Erforderlichkeit einer Signatur von mindestens zweier Signiereinrichtungen (7) umfasst.

5. System (1) nach einem oder mehreren der vorhergehenden Ansprüche
**dadurch gekennzeichnet, dass**
der Antwortdatensatz einen dritten Datensatz umfasst, der einen Informationswert über eine Handlung aufweist, auf dessen Basis die Aktionseinrichtung (9) den Aktionsdatensatz generiert, wobei der Aktionsdatensatz Steuer- und/oder Regelungsbefehle umfasst.

6. System (1) nach einem oder mehreren der vorhergehenden Ansprüche
**dadurch gekennzeichnet, dass**
die Übermittlung des Anforderungsdatensatzes, des Antwortdatensatzes, des Aktionsdatensatzes, des Datenobjektes als ein Datenübertragungsprozess über eine IP-basierte Kommunikation erfolgt, wobei mindestens ein Datenübertragungsprozess durch ein Sicherheitsmodul kryptographisch abgesichert durchgeführt wird.

7. System (1) nach einem oder mehreren der vorhergehenden Ansprüche
**dadurch gekennzeichnet, dass**
der erste und/oder zweite und/oder dritte Datensatz Daten aufweist ausgesucht aus der Gruppe umfassend Standortdaten, personenbezogene Daten, zeitbezogene Daten, Audiodaten, Bilddaten, Analysedaten, Prozessdaten, Verwendungsdaten, Textdaten und/oder Videodaten,
- wobei der Informationswert über das Auslösungsereignisses in dem ersten Datensatz eine qualitätsbezogene und/oder quantitätsbezogene Information über das Auslösungsereignis umfasst.

8. System (1) nach einem oder mehreren der vorhergehenden Ansprüche
**dadurch gekennzeichnet, dass**
die Auditoreinrichtung (3) dazu eingerichtet ist, unter Bezugnahme des Aktionsdatensatzes eine Steuerung und/oder Regelung einer Sensorik und/oder Aktuatorik zu initiieren, wobei die Sensorik und Aktuatorik ausgesucht ist aus der Gruppe umfassend: Strom-, Wasser- und Energiemengenzähler, Temperatur- und Druckmessumformer, Ventil, Pumpe, elektrische Schaltanlage, Zugangssteuerung.

9. System (1) nach einem oder mehreren der vorhergehenden Ansprüche
**dadurch gekennzeichnet, dass**
anlagenbezogene Prozessgrößen ausgesucht sind aus der Gruppe umfassend Strom-, Wasser- oder Wärmeverbrauch, Zugangsüberwachung, Betriebsparameter wie Anlagenschmierung, -verschleiß, -temperatur, -verunreinigung.

10. Verfahren zur rechtssicheren, intelligenten Steuerung von Prozessen in einer Anlage (13) zur Erzeugung und/oder Bereitstellung von Energie umfassend die nachfolgenden Schritte:
a. Automatisierte Aufnahme anlagenbezogener Prozessgrößen durch eine Erfassungseinrichtung (11);
b. Erkennung eines Auslösungsereignisses und Erzeugung eines ersten Datensatzes durch eine Auditoreinrichtung (3), wobei der erste Datensatz mindestens eine der aufgenommenen Prozessgrößen und/oder einen Informationswert über das Auslösungsereignis umfasst und als ein Datenobjekt an eine Aktionseinrichtung (9) übermittelt wird;
c. Ermittlung einer für das Datenobjekt zuständigen ersten und/oder zweiten Signiereinrichtung (7);
d. Übermittelung eines ersten und/oder zweiten Anforderungsdatensatzes an die dem Datenobjekt zugeordnete erste und/oder zweite Signiereinrichtung (7) durch die Aktionseinrichtung (9), wobei der erste und/oder zweite Anforderungsdatensatz eine Signaturanforderung und mindestens einen Teil des Datenobjektes umfasst;
e. Erzeugung eines ersten und/oder zweiten Antwortdatensatzes durch die erste und/oder zweite Signiereinrichtung (7), wobei der erste und/oder zweite Antwortdatensatz eine elektronische Signatur über mindestens einen Teil des ersten und/oder zweiten Anforderungsdatensatzes umfasst;
f. Übermittelung des ersten und/oder zweiten Antwortdatensatzes an die Aktionseinrichtung (9) und/oder an eine weitere Signiereinrichtung (7);
g. Übermittlung eines Aktionsdatensatzes an die Auditoreinrichtung (3) durch die Aktionseinrichtung (9), wobei der Aktionsdatensatz Steuer- und/oder Regelungsbefehle umfasst.

11. Verfahren gemäß Anspruch 10
**dadurch gekennzeichnet, dass**
die folgenden Schritte zwischen den Verfahrensschritten b und c stehen:
b1. Übermittelung des ersten Datensatzes an einen Berichtsgenerator (5);
b2. Erkennung eines Musters, eines Eintrittsereignisses, eines Vorhersageereignisses und/oder einer Handlungsoption aufgrund einer Analyse der aufgenommenen Prozessgrößen und/oder des Informationswertes über das Auslösungsereignis;
b3. Ergänzung des ersten Datensatzes und/oder Erstellen eines zweiten Datensatzes mit einem Informationswert über das Muster, das Eintrittsereignis, das Vorhersageereignisses und/oder der Handlungsoption
b4. Übermittelung des ersten und/oder zweiten Datensatzes als ein Datenobjekt an die Aktionseinrichtung (9).

12. Verfahren nach Anspruch 10 und/oder 11
**dadurch gekennzeichnet, dass**
die eine weitere Signiereinrichtung (7) einen weiteren Antwortdatensatz mit einer weiteren elektronischen Signatur erzeugt und an die Aktionseinrichtung (9) übermittelt.

13. Verfahren nach einem oder mehreren der vorhergehenden Ansprüche 10-12
**dadurch gekennzeichnet, dass**
die Auditoreinrichtung (3) unter Bezugnahme des Aktionsdatensatzes eine Steuerung und/oder Regelung einer Sensorik und/oder Aktuatorik initiiert.

14. Verfahren nach einem oder mehreren der vorhergehenden Ansprüche 10-13
**dadurch gekennzeichnet, dass**
die Aktionseinrichtung (9) bei einer fehlenden Übermittlung des Antwortdatensatzes nach einem festgelegten Zeitintervall, dem Datenobjekt eine weitere Signiereinrichtung (7) zuordnet.

15. Verfahren nach einem oder mehreren der vorhergehenden Ansprüche 10-14
**dadurch gekennzeichnet, dass**
die Analyse der aufgenommenen Prozessgrößen und/oder die Ermittlung des Auslösungsereignisses und/oder des Musters und/oder des Eintrittsereignisses und/oder des Vorhersageereignisses und/oder der Handlungsoption über Algorithmen der künstlichen Intelligenz erfolgt.
